# EUROPEAN PATENT SPECIFICATION

(11) **EP 2 884 304 B1**
(45) Date of publication and mention of the grant of the patent: **11.09.2019**
(21) Application number: 14197272.9
(22) Date of filing: 11.12.2014
(51) Int. Cl.: G01S 17/02, G01S 7/481, G01V 8/14

(54) **Attachment for optical component and photoelectric sensor unit including the attachment**
Befestigung für eine optische Komponente und fotoelektrische Sensoreinheit mit der Befestigung
Fixation pour composant optique et unité de capteur photoélectrique comprenant la fixation

(30) Priority: 13.12.2013 JP 2013258683
(43) Date of publication of application: 17.06.2015
(73) Proprietor: OMRON CORPORATION, Kyoto, Kyoto 600-8530 (JP)
(72) Inventor: Murata, Kenji, Kyoto, Kyoto 600-8530 (JP); Shinohara, Taiki, Kyoto, Kyoto 600-8530 (JP)
(74) Representative: Horn Kleimann Waitzhofer Patentanwälte PartG mbB

(56) References cited:
- DE-U1- 9 320 761
- US-A- 4 771 437
- US-A1- 2004 079 871
- US-A1- 2009 283 666

## Description

### FIELD

The present invention relates to an attachment for an optical component and a photoelectric sensor unit including the attachment.

### BACKGROUND

A photoelectric sensor is typically used to detect an object on, for example, a manufacturing line at a factory. The photoelectric sensor is designed to have an attachment (optional unit) to change the shape of an illuminating beam optimally for a detection target (refer to, for example, Patent Literature 1).

This attachment may include a lens arranged to face the light emitting surface of the photoelectric sensor, from which the sensor emits an illuminating beam.

### CITATION LIST

### PATENT LITERATURE

Patent Literature 1: Japanese Unexamined Patent Application Publication No. 2004-71366
Patent Literature 2: US 2009/0283666 A1 discloses a cover that is sealed with an elastically deformable sealing member to a casing.
Patent Literature 3: DE 93 20 761 U1 discloses a window that is sealed with a sealant to a casing.
Patent Literature 4: US 4 771 437 A discloses an output coupling mirror of a laser resonator that is sealed to a casing.

### SUMMARY

### TECHNICAL PROBLEM

However, when the attachment is mounted on the photoelectric sensor described above, a small gap may form between the lens surface of the attachment and the light emitting surface of the photoelectric sensor. Foreign matter or water may enter this gap and disturb the illuminating beam. This can reduce the light receiving amount and cause erroneous detection.

In factories where dust or other matter is suspended, air blow may be used to blow off foreign matter or water. However, the air blow may not remove foreign matter or water caught in such a small gap.

It is an object of the present invention to provide an attachment for an optical component for preventing foreign matter or water from entering a gap between the optical component and the attachment, and a photoelectric sensor unit including the attachment.

### SOLUTION TO PROBLEM

A first aspect of the invention provides an attachment mountable onto an optical component. The optical component includes an optical-component light passing unit configured to transmit light. The attachment includes a light transmissive element configured to transmit light, an accommodating unit configured to accommodate the light transmissive element, an attachment unit configured to attach the accommodating unit onto the optical component in such a manner that the light transmissive element faces the optical-component light passing unit, and a sealant configured to seal a light passing area where light passes being included in a space between a surface of the optical-component light passing unit facing the light transmissive element and a surface of the light transmissive element facing the optical-component light passing unit when the attachment is mounted on the optical component.

The sealant includes a contact portion configured to come in contact with the surface of the optical-component light passing unit and the surface of the light transmissive element and seal a circumference of the light passing area in the space when the attachment is mounted on the optical component, a fixing portion spaced outwardly from the contact portion and configured to fix the contact portion to the accommodating unit, and a connecting portion configured to connect the contact portion and the fixing portion.

As described above, the contact portion of the sealant seals the circumference of an area where light passes in a small space between the surface of the light transmissive element and the surface of the optical-component light passing unit.

This structure prevents foreign matter or water droplets from particularly entering an area where light passes in a space between the surface of the light transmissive element and the surface of the optical-component light passing unit.
The fixing portion is spaced from the contact portion. Thus, repeatedly mounting the attachment onto the optical component and thus repeating compressing and decompressing the contact portion will have little impact on the fixing portion. This achieves stable fixing.

A second aspect of the invention provides the attachment for an optical component of the first aspect of the invention in which the fixing portion is arranged at an end of the sealant in a direction along a surface of the accommodating unit. The fixing portion arranged at the end of the sealant achieves larger spacing from the contact portion, and thus can minimize the impact of the compressed contact portion on the fixing portion.

A third aspect of the invention provides the attachment of the second aspect of the invention in which the accommodating unit includes a facing portion facing the fixing portion. The fixing portion and the facing portion have a gap therebetween. The fixing portion is fixed to the accommodating unit with an adhesive placed in the gap.

In this structure, the gap between the fixing portion and the facing portion is used to store liquid, or is filled with adhesive, to fix the sealant to the accommodating unit. This achieves stronger fixing with adhesive.

A fourth aspect of the invention provides the attachment of the third aspect of the invention in which the fixing portion and the facing portion face each other in a direction substantially perpendicular to a direction in which the light transmissive element and the optical-component light passing unit face each other. When this attachment is mounted on the optical component, the contact portion is compressed in a direction in which the light transmissive element and the optical-component light passing unit face each other. This compression generates a force with which the fixing portion moves in the direction of the facing portion, and generates a force pressing the adhesive filled in the gap. As a result, the adhesive does not come off easily, and improves the reliability of the fixing with adhesive.

A fifth aspect of the invention provides the attachment of the first aspect of the invention in which the contact portion includes a first protrusion protruding from where the connecting portion is arranged toward the light transmissive element, and a second protrusion protruding from where the connecting portion is arranged toward an opposite to the light transmissive element. The connecting portion extends from the contact portion along a surface of the accommodating unit.

As a result, the first protrusion comes in contact with the surface of the light transmissive element. When the attachment is mounted on the optical component, the second protrusion comes in contact with the surface of the optical-component light passing unit. This seals the circumference of an area where laser light passes in a small space between the surface of the light transmissive element and the surface of the optical-component light passing unit.

A sixth aspect of the invention provides the attachment of the fifth aspect of the invention in which the connecting portion includes a step on a surface thereof where the first protrusion is arranged, and a part of the connecting portion around the first protrusion is thinner than other parts of the connecting portion.

This structure allows the first protrusion to have a lower strength, and allows the first protrusion to be placed easily along the upper and lower rims of the accommodating unit accommodating the light transmissive element. The sealant with dimensional errors can extend along the rims, and thus is prevented from being bent inward and disturbing the laser beam.

A seventh aspect of the invention provides the attachment of the fifth aspect of the invention in which the second protrusion has a width greater than a width of the first protrusion, and the second protrusion protrudes by a smaller height than the first protrusion.

When the distance from the sealant to the light transmissive element is longer than the distance from the sealant to the optical-component light passing unit, the second protrusion may be set thicker than the first protrusion so that the pressing force from the first protrusion against the light transmissive element can be substantially the same as the pressing force from the second protrusion against the optical-component light passing unit. This achieves stable sealing.

An eighth aspect of the invention provides the attachment of the first aspect of the invention in which the optical component is a photoelectric sensor, the optical-component light passing unit allows light to pass through and be emitted out of the sensor, and the light transmissive element allows the emitted light to pass through.

As described above, this attachment is used for a photoelectric sensor. In this case, simply changing the attachment can change the shape of the illuminating beam produced by the sensor optimally for a detection target. This attachment also prevents foreign matter and water droplets from entering the sensor and lowering the sensitivity.

A ninth aspect of the invention provides the attachment of the eighth aspect of the invention in which the contact portion includes an end that comes in contact with the optical-component light passing unit, and the end of the contact portion is inclined in correspondence with a surface of the optical-component light passing unit that is inclined relative to a direction perpendicular to a direction in which the light is emitted.

The surface of the optical-component light passing unit in the photoelectric sensor is inclined relative to a direction perpendicular to the optical axis to prevent the emitted laser beam from entering a power monitor. The end of the contact portion that comes in contact with the optical-component light passing unit is inclined in conformance with this inclination. This allows the contact portion to easily come in contact with the optical-component light passing unit, and achieves more reliable sealing.

A tenth aspect of the invention provides the attachment for an optical component according to the eighth aspect of the invention in which the accommodating unit covers a rectangular surface of the photoelectric sensor that is long in a first direction when the attachment is mounted on the optical component, where the rectangular surface includes the optical-component light passing unit, and the attachment unit holds the photoelectric sensor in the first direction to attach the accommodating unit to the photoelectric sensor. The attachment can be easily mountable onto the photoelectric sensor, and thus allows the attachment to be changed easily for each measurement target component. This eliminates the need to use a special photoelectric sensor for each measurement target component, and thus reduces the cost.

An eleventh aspect of the invention provides the attachment of the tenth aspect of the invention in which the fixing portion is arranged on an end of the sealant in the first direction.

As described above, the fixing portion arranged on the end of the sealant in longitudinal direction, or the first direction to achieve larger spacing of the fixing portion from the contact portion, and thus can minimize the impact of the compressed contact portion on the fixing portion.

A twelfth aspect of the invention provides a photoelectric sensor unit including a photoelectric sensor including a light emitting unit configured to emit light, and the attachment for an optical component according to one of the first to eleventh aspects of the invention. The attachment is mountable onto the photoelectric sensor. Apart of the photoelectric sensor where the optical-component light passing unit is arranged is watertight.

This structure prevents foreign matter or water droplets from particularly entering an area where light passes in a space between the surface of the light transmissive element in the attachment and the surface of the light transmissive element in the photoelectric sensor.

A thirteenth aspect of the invention provides a photoelectric sensor unit including a photoelectric sensor including a light emitting unit configured to emit light, and the attachment for an optical component according to one of the first to eleventh aspects of the invention. The attachment is mountable onto the photoelectric sensor. The photoelectric sensor includes an enclosure that is watertight.

This structure prevents foreign matter or water droplets from particularly entering an area where light passes in a space between the surface of the light transmissive element in the attachment and the surface of the light transmissive element in the photoelectric sensor.

### ADVANTAGEOUS EFFECTS

The attachment of the invention for an optical component and the photoelectric sensor unit including the attachment prevent foreign matter or water from entering a gap between the optical component and the attachment.

### BRIEF DESCRIPTION OF THE DRAWINGS

Fig. 1 is an overall perspective view of a photoelectric sensor unit according to a first embodiment of the invention.
Figs. 2A, 2B, and 2C are a side view, a front view, and a rear view of the photoelectric sensor unit shown in Fig. 1.
Fig. 3 is a perspective view of the photoelectric sensor unit including the photoelectric sensor of Fig. 1 from which the attachment has been removed.
Fig. 4 is a cross-sectional view taken on line A-A in Fig. 2B.
Fig. 5A is a perspective view of the attachment of the photoelectric sensor unit of Fig. 1 as viewed from the front of the attachment, Fig. 5B is a perspective view of the attachment as viewed from the rear of the attachment, and Fig. 5C is a perspective view of the attachment in Fig. 5B from which a sealant has been removed.
Figs. 6A to 6E are a front view, a rear view, a side view, a top view, and a bottom view of the attachment shown in Fig. 5A.
Fig. 7A is a perspective view of the sealant of the attachment shown in Fig. 5A as viewed from the front of the attachment, and Fig. 7B is a perspective view of the sealant as viewed from the rear of the attachment.
Figs. 8A, 8B, and 8C are a front view, a side view, and a rear view of the sealant shown in Fig. 7A, Fig. 8D is a cross-sectional view taken along line D-D in Fig. 8A, and Fig. 8E is a cross-sectional view taken along line C-C in Fig. 8A.
Fig. 9A is a cross-sectional view taken along line A-A in Fig. 2B, and Fig. 9B is an enlarged view of area V in Fig. 9A.
Fig. 10A is a partially enlarged view of Fig. 9A, and Fig. 10B is a cross-sectional view taken along line E-E in Fig. 2A.
Fig. 11 is a partially enlarged view of Fig. 9A.
Fig. 12 is an overall perspective view of a photoelectric sensor unit according to a first embodiment of the invention.
Figs. 13A, 13B, and 13C are a side view, a front view, and a rear view of the photoelectric sensor unit shown in Fig. 12.
Fig. 14 is a perspective view of the photoelectric sensor unit including the photoelectric sensor of Fig. 12 from which the attachment has been removed.
Fig. 15 is a cross-sectional view taken along line A-A in Fig. 13B.
Figs. 16A is a perspective view of the attachment of the photoelectric sensor unit shown in Fig. 12 as viewed from the front, Fig. 16B is a perspective view of the attachment as viewed from the rear, and Fig. 16C is a perspective view of the attachment shown in Fig. 16B from which a sealant has been removed.
Figs. 17A to 17E are a front view, a rear view, a side view, a top view, and a bottom view of the attachment shown in Fig. 16A.
Fig. 18A is a perspective view of the sealant of the attachment shown in Fig. 16A as viewed from the front of the attachment, and Fig. 18B is a perspective view of the sealant as viewed from the rear of the attachment.
Figs. 19A, 19B, and 19C are a front view, a side view, and a rear view of the sealant shown in Fig. 18A, and Fig. 19D is a cross-sectional view taken along line D-D in Fig. 19A.
Fig. 20A is a cross-sectional view taken along line A-A in Fig. 13B, and Fig. 20B is an enlarged view of area V in Fig. 20A.
Fig. 21A is a partially enlarged view of Fig. 20A, and Fig. 21B is a cross-sectional view taken along line E-E in Fig. 13A.
Fig. 22 is a front view of a sealant according to a modification of the first embodiment of the invention.

### DETAILED DESCRIPTION

Embodiments of the present invention will now be described with reference to the drawings. To avoid redundancy and to facilitate understanding of persons skilled in the art, for example, matters known in the art may not be described in detail and components that are substantially the same as the components described may not be described.

The following description and the accompanying drawings are provided by the applicant to enable persons skilled in the art to fully understand the contents of the present invention, and are not intended to limit the subject matter claimed.

### First Embodiment

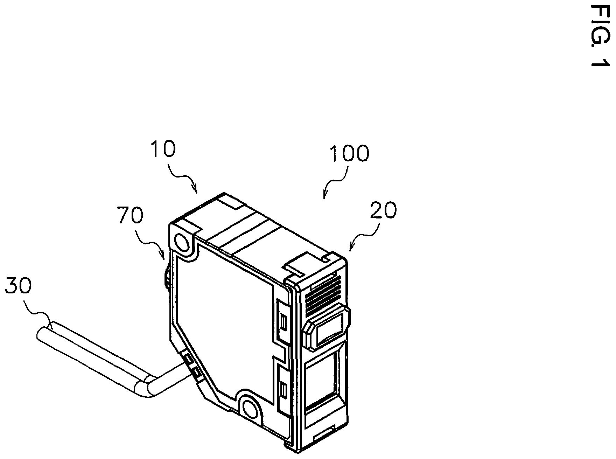

An attachment 20 according to a first embodiment of the invention and a photoelectric sensor unit 100 onto which the attachment 20 is mounted will be described with reference to Figs. 1 to 11.

In the description below, the direction being forward or backward refers to the direction determined by assuming that the surface onto which a laser beam is applied from the photoelectric sensor unit 100 is the front surface. The direction being upward or downward and the direction being vertical (an example of a first direction) is the direction along the long axis of a front surface 11a of the photoelectric sensor unit 100. The direction to the left or to the right or being horizontal is the forward or backward direction and the direction orthogonal to the long axis direction.

### Overall Structure of the Photoelectric Sensor Unit 100

Fig. 1 is a perspective view showing the appearance of the photoelectric sensor unit 100 according to the first embodiment.

As shown in Fig. 1, the photoelectric sensor unit 100 according to the present embodiment includes a photoelectric sensor 10, which is a retroreflective photoelectric sensor that receives reflected light of its emitted light and detects the presence of a detection target (target). The photoelectric sensor unit 100 is used as, for example, a photoelectric switch, an optical distance determination sensor, or an optical displacement sensor. As shown in Fig. 1, the photoelectric sensor unit 100 includes the photoelectric sensor 10, an attachment 20, and a cord 30.

### 1. Photoelectric Sensor 10

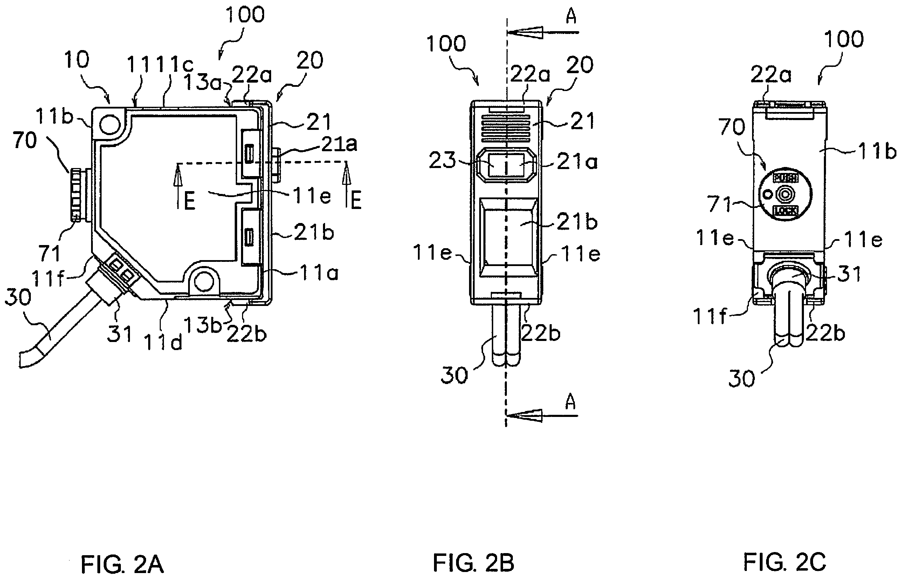

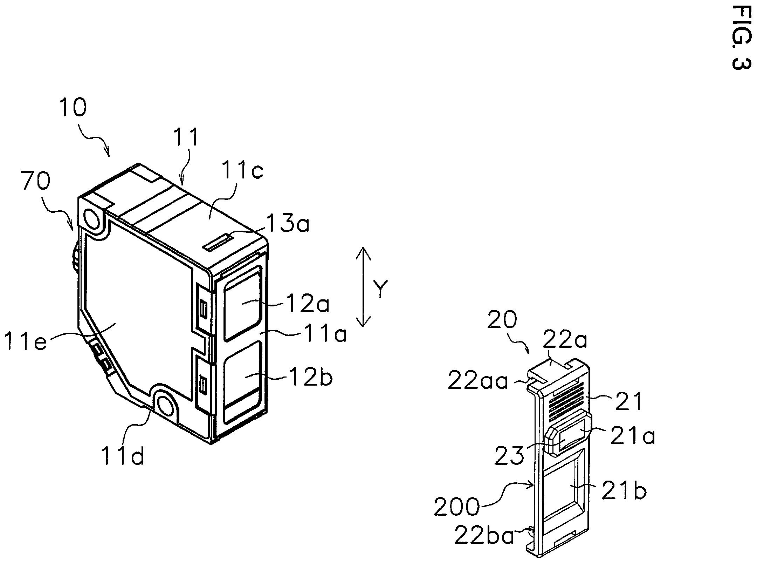

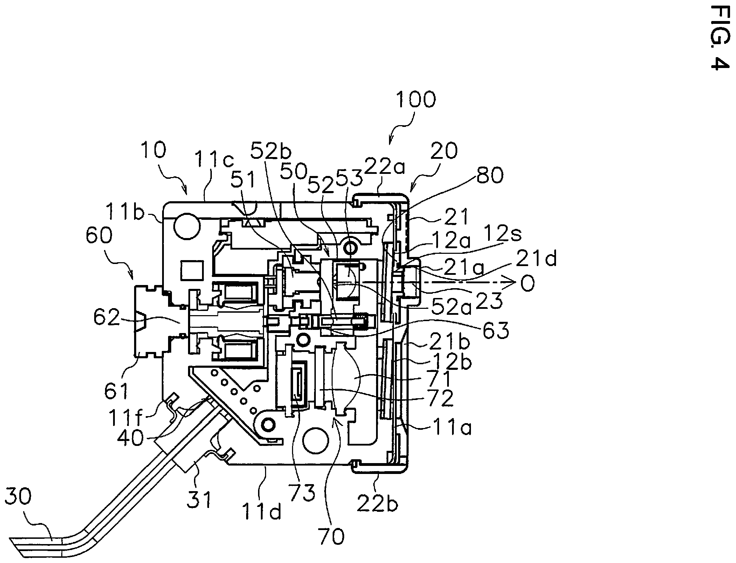

Fig. 2A is a side view of the photoelectric sensor unit 100. Fig. 2B is a front view of the photoelectric sensor unit 100. Fig. 2C is a rear view of the photoelectric sensor unit 100. Fig. 3 is a perspective view showing the appearance of the photoelectric sensor 10 from which the attachment 20 has been removed. Fig. 4 is a cross-sectional view taken along line A-A in Fig. 2B.

As shown in Fig. 4, the photoelectric sensor 10 includes a connecting portion 40, a light emitting unit 50, a driving mechanism 60, and a light receiving unit 70 (described below) as its internal components. As shown in Fig. 3, the photoelectric sensor 10 further includes an enclosure 11, and a light emitting window 12a and a light receiving window 12b. The attachment 20 is mounted on the photoelectric sensor 10 at a front surface 11a of the enclosure 11 in which the light emitting window 12a and the light receiving window 12b are formed. In the present embodiment, the front surface 11a is watertight. The entire enclosure 11 may be watertight.

The enclosure 11 is a boxlike member defining the contour of the photoelectric sensor 10. The enclosure 11 includes seven surfaces, that is, the front surface 11a, a back surface 11b, an upper surface 11c, a lower surface 11d, two side surfaces 11e and 11e, and an inclined surface 11f. The front surface 11a is the surface from which light is emitted toward the detection target and at which the reflected light is received. As shown in Fig. 2A, Fig. 3, and other figures, the attachment 20 is mounted on the front surface 11a. As shown in Fig. 3, the front surface 11a includes the light emitting window 12a for emitting light and the light receiving window 12b for receiving the emitted light and guiding it into the enclosure 11, which are arranged in the long axis direction (vertical direction in Fig. 3 or Y-direction, which is an example of a first direction).

As shown in Figs. 2A and 2C, the back surface 11b is opposite to the front surface 11a for emitting and receiving light. An operational part 61, which is used to operate the driving mechanism 60 (described below), is arranged on the back surface 11b.

The upper surface 11c joins the upper end of the front surface 11a and the upper end of the back surface 11b, and defines the ceiling of the enclosure 11. As shown in Fig. 2A and Fig. 3, the upper surface 11c includes, at a position near the front surface 11a, an engagement groove 13a, which is engaged with an engagement portion 22aa of a catch portion 22a of the attachment 20.

The lower surface 11d is opposite to the upper surface 11c. The lower surface 11d joins the lower end of the front surface 11a and the lower end of the back surface 11b, and defines the bottom of the enclosure 11. As shown in Fig. 2A, the lower surface 11d includes, at a position near the front surface 11a, an engagement groove 13b, which is engaged with an engagement portion 22ba of a catch portion 22b of the attachment 20.

The two side surfaces 11e are substantially flat portions defining the sides of the photoelectric sensor 10.

As shown in Fig. 2A, the inclined surface 11f, which is arranged below the back surface 11b, is inclined relative to the back surface 11b and to the lower surface 11d. A cord holder 31 of the cord 30 is fixed to the inclined surface 11f.

The light emitting window 12a allows light from the light emitting unit 50 (described below) (refer to Fig. 4) arranged in the enclosure 11 to be emitted out of the sensor. The surface of the light emitting window 12a is inclined by about 2 degrees relative to the optical axis of the emitted light to prevent the light that has been emitted out of the sensor from being reflected on the surface of the light emitting window 12a and entering a power monitor of the light emitting unit 50. The power monitor measures the intensity of a laser beam emitted from a laser diode (LD) 51 (described below). The measured intensity of the laser beam is used to control the illuminating laser beam. If the illuminating laser beam returns to the power monitor, the returned beam will change the intensity of the laser beam to be measured and causes the intensity of the laser beam to be unstable. The light emitting window 12a is inclined as described above to prevent the laser beam from returning to the power monitor, and stabilizes the intensity of the illuminating laser beam.

The light receiving window 12b receives the reflected light of the light that has been emitted from the light emitting window 12a, and guides the received light to the light receiving unit 70 (refer to Fig. 4), which is arranged in the enclosure 11.

The internal components of the photoelectric sensor 10 will be described below in detail.

### 1-1 Connecting Portion 40

As shown in Fig. 4, the connecting portion 40 is arranged at a lower position on the back surface 11b within the enclosure 11 of the photoelectric sensor 10. The connecting portion 40 comes in contact with a plurality of terminals arranged on the cord holder 31 to electrically connect the cord 30 and the photoelectric sensor 10.

As a result, the amplifier (not shown) and the photoelectric sensor 10 electrically connect to each other with the cord 30, allowing a drive voltage to be provided to the photoelectric sensor 10 and a detection signal from the photoelectric sensor 10 to be received by the amplifier, which can then determine the presence of the detection target and other information.

### 1-2 Light Emitting Unit 50

The light emitting unit 50 emits light toward the detection target. As shown in Fig. 4, the light emitting unit 50 is arranged behind the light emitting window 12a of the enclosure 11 of the photoelectric sensor 10. The light emitting unit 50 includes a laser diode (LD) 51, a lens holder 52, and a transmitter lens 53.

The LD 51, which is a light source for emitting laser light having a predetermined wavelength, is arranged at the lowermost position of the light emitting unit 50 in the optical axis direction. In detail, as shown in Fig. 4, the LD 51 is arranged at a position slightly nearer the upper surface 11c in the middle of the enclosure 11. In the present embodiment, the LD 51 is fixed inside the photoelectric sensor 10.

The lens holder 52 is arranged to hold the transmitter lens 53. The lens holder 52 has a slit 52a between the transmitter lens 53 and the LD 51 for guiding a laser beam from the LD 51 to the transmitter lens 53. The lens holder 52 moves forward and backward in the optical axis direction integrally with the transmitter lens 53 when driven by the driving mechanism 60. The transmitter lens 53 focuses the laser beam and guides the beam toward the light emitting window 12a.

### 1-3 Driving Mechanism 60

As shown in Fig. 4, the driving mechanism 60 is arranged inside the photoelectric sensor 10 to extend in the optical axis direction from the back surface 11b. The driving mechanism 60 adjusts the distance between the LD 51 and the transmitter lens 53 described above in the optical axis direction by moving the transmitter lens 53. The driving mechanism 60 includes the operational part 61, a rotational axis 62, and a shaft 63. The shaft 63 has a screw portion on its circumferential surface. The shaft 63 is inserted through a shaft-receiving hole 52b of the lens holder 52. The shaft-receiving hole 52b has, on its inner circumferential surface, a screw portion, which is screwed with the screw portion on the circumferential surface of the shaft 63. Rotating the operational part 61 clockwise or counterclockwise rotates the shaft 63 with the rotational axis 62, and moves the lens holder 52 in the optical axis direction.

### 1-4 Light Receiving Unit 70

The light receiving unit 70 receives reflected light of the laser light emitted from the light emitting unit 50 toward the detection target, and detects the amount of the reflected light. As shown in Fig. 4, the light receiving unit 70 includes a receiver lens 71, a filter 72, and a light receiving element 73.

The receiver lens 71 is arranged in proximity of and behind the light receiving window 12b to focus reflected light of the laser light emitted from the light emitting unit 50 onto the detection target, and to guide the light onto the light receiving element 73.

The filter 72 removes an unnecessary portion of the laser light that has passed through the receiver lens 71 to improve the integrity of the reflected light detected by the light receiving element 73 and to improve the measurement accuracy.

The light receiving element 73 receives the reflected light that has passed through the receiver lens 71 and the filter 72, and outputs a light receiving signal generated in accordance with the received amount of the reflected light. The light receiving signal is transmitted to an amplifier (not shown) via the connecting portion 40 and the cord 30. As a result, the amplifier can determine the presence of the detection target and other information based on, for example, the level of the light receiving signal.

### 2. Cord 30

The cord 30 is connected to an amplifier (not shown) and the photoelectric sensor 10. In detail, as shown in Fig. 4, the cord 30 is connected to the connecting portion 40 arranged in the photoelectric sensor 10 with the cord holder 31.

This structure allows a drive voltage provided from the amplifier and various signals transmitted between the amplifier and the photoelectric sensor 10 to be transmitted and received with the cord 30.

### 3. Attachment 20

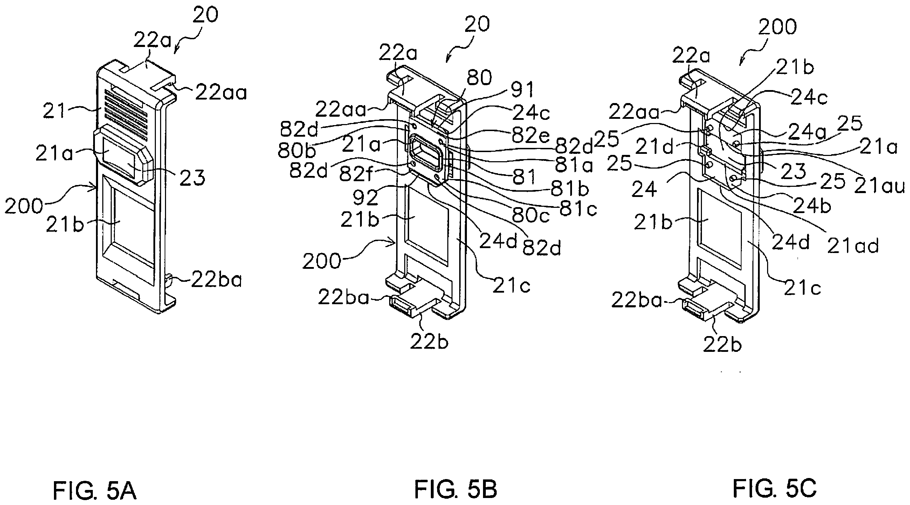

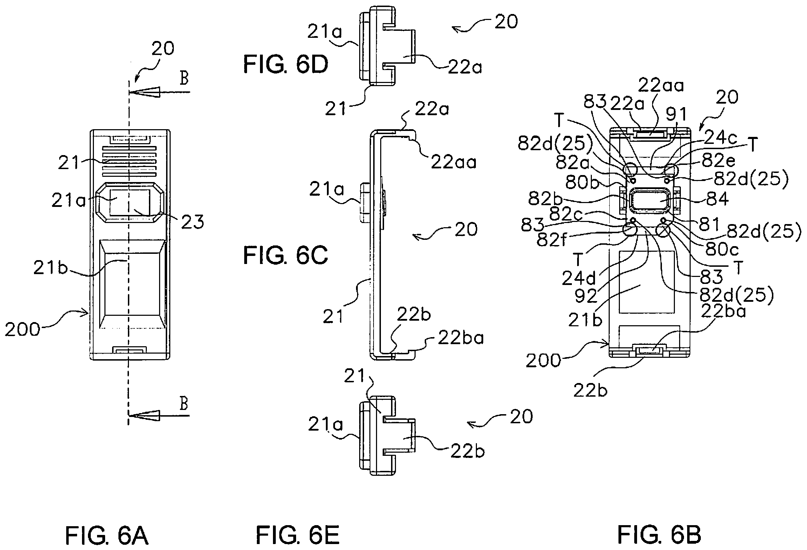

Fig. 5A is a perspective view of the attachment 20 as viewed from the front. Fig. 5B is a perspective view of the attachment 20 as viewed from the rear. Fig. 5C shows the attachment in Fig. 5B from which a sealant 80 has been removed. Figs. 6A to 6E are a front view, a rear view, a side view, a top view, and a bottom view of the attachment 20.

As shown in Figs. 5A and 5B and Figs. 6A to 6E, the attachment 20 is capable of shaping a light beam emitted from the light emitting window 12a of the photoelectric sensor 10. The attachment 20 includes an attachment body 200 and the sealant 80.

### 3-1 Attachment Body 200

As shown in Fig. 5B, the attachment body 200 includes an accommodating unit 21, catch portions 22a and 22b, a cylindrical lens 23, and a sealant 80.

The cylindrical lens 23 is attached to the accommodating unit 21. The accommodating unit 21 is a flat member arranged in proximity of and along the front surface 11a of the photoelectric sensor 10 when the attachment 20 is mounted on the photoelectric sensor 10. The accommodating unit 21 includes a light emitting unit 21a and an opening 21b.

As shown in Fig. 4 and Fig. 5A, the light emitting portion 21a is arranged in the upper half of the accommodating unit 21. The light emitting portion 21a is placed in front of the light emitting window 12a of the photoelectric sensor 10 when the attachment 20 is mounted on the photoelectric sensor 10. As shown in Fig. 4 and Fig. 5C, the light emitting unit 21a has a through-hole 21d, which accommodates the cylindrical lens 23. Light emitted through the light emitting window 12a of the photoelectric sensor 10 is emitted out of the sensor after passing through the cylindrical lens 23, which is attached to the light emitting unit 21a. The through-hole 21d has an upper rim 21au and a lower rim 21ad shown in Fig. 5C.

As shown in Figs. 5A to 5C and Figs. 6A and 6B, the opening 21b is formed in the lower half of the accommodating unit 21. The opening 21b is placed in front of the light receiving window 12b of the photoelectric sensor 10 when the attachment 20 is mounted on the photoelectric sensor 10 (refer to Fig. 4). The opening 21b is a through-hole formed through the surface of the accommodating unit 21. Reflected light of the light emitted through the light emitting window 12a of the photoelectric sensor 10 passes through the opening 21b and enters the photoelectric sensor 10 through the light receiving window 12b (refer to Fig. 4).

As shown in Figs. 5A to 5C and Figs. 6B to 6E, the catch portions 22a and 22b are elastic members for mounting the attachment 20 onto the photoelectric sensor 10. The catch portions 22a and 22b are arranged to protrude perpendicularly from the upper end and the lower end of the accommodating unit 21. The catch portions 22a and 22b include engagement portions 22aa and 22bb at the distal ends of their flat portions that are parallel to the upper surface 11c and the lower surface 11d of the photoelectric sensor 10 when the attachment 20 is mounted on the photoelectric sensor 10.

As shown in Fig. 5B and Fig. 6C, the engagement portions 22aa and 22bb protrude downward and upward from the flat portions of the catch portions 22a and 22b. When the attachment 20 is mounted on the photoelectric sensor 10, the catch portions 22a and 22b of the engagement portions 22aa and 22bb deform elastically and move along the upper surface 11c and the lower surface 11d, and are engaged with the engagement grooves 13a and 13b at their mounting positions as shown in Fig. 2. This fixes the attachment 20 on the photoelectric sensor 10.

### 3-2 Sealant 80

As shown in Figs. 5B and 5C and Fig. 6B, the sealant 80 is arranged inside the cylindrical lens 23, and is fixed to a recess 24 formed on the accommodating unit 21 (refer to Fig. 5C) with adhesive. The sealant 80 is arranged between the cylindrical lens 23 and the light emitting window 12a when the attachment 20 is mounted on the photoelectric sensor 10.

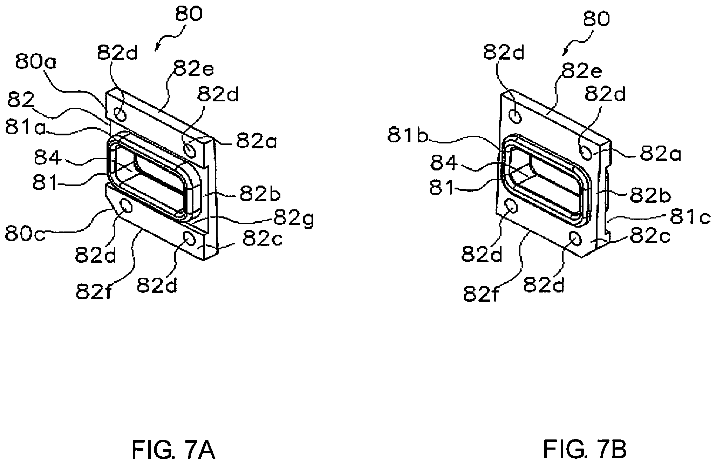

Fig. 7A is a perspective view of the sealant 80 as viewed from the front (from the cylindrical lens 23). Fig. 7B is a perspective view of the sealant 80 as viewed from the rear (from the photoelectric sensor 10).

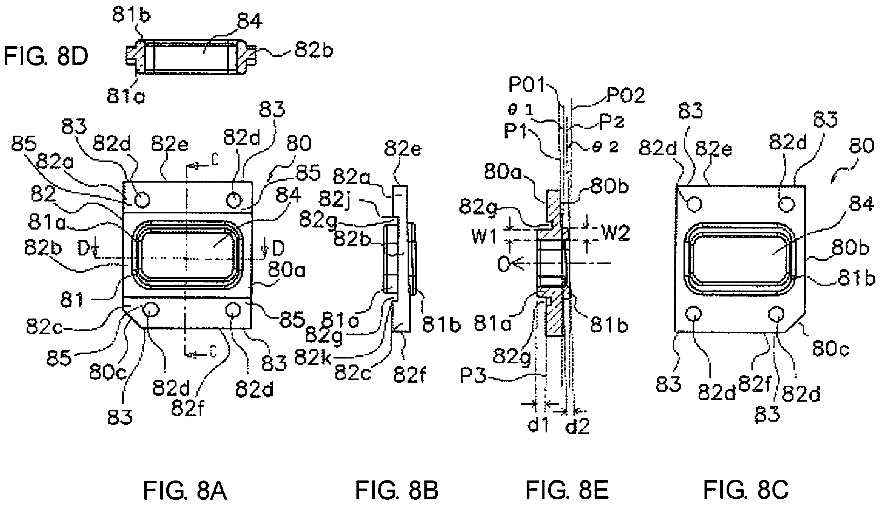

Figs. 8A to 8C are a front view, a side view, and a rear view of the sealant 80. Fig. 8D is a cross-sectional view taken along line D-D in Fig. 8A. Fig. 8E is a cross-sectional view taken along line C-C in Fig. 8A.

As shown in Figs. 7A and 7B and Figs. 8A to 8C, the sealant 80 is a substantially rectangular member in which a horizontally long rectangular opening 84 as viewed from the front is formed in the middle. The sealant 80 is made of elastic material such as rubber. The sealant 80 includes a chamfered portion 80c at one of its vertexes.

The sealant 80 includes a contact portion 81, a flat portion 82, and fixing portions 83. When the surface of the sealant 80 nearer the cylindrical lens 23 is referred to as a front surface 80a, the surface of the sealant 80 nearer the photoelectric sensor 10 when the attachment 20 is mounted on the photoelectric sensor 10 is referred to as a back surface 80b.

### 3-2-1 Contact Portion 81

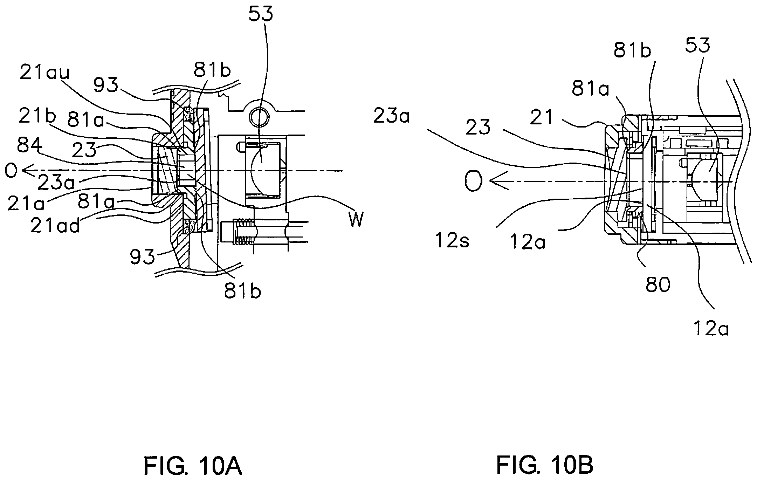

The contact portion 81 is a substantially tubular member defining the rectangular opening 84. The contact portion 81 is arranged along the rim of the cylindrical lens 23. As shown in Fig. 5C, the cylindrical lens 23 is horizontally long rectangular as viewed from the front. As a result, the contact portion 81 is also horizontally long rectangular as viewed from the front. When the attachment 20 is mounted on the photoelectric sensor 10, the contact portion 81 is sandwiched and compressed between the cylindrical lens 23 and the light emitting window 12a as shown in Fig. 10A (described below). The contact portion 81 is arranged to define an area from which a laser beam is emitted so that the contact portion 81 does not disturb the laser beam. The laser beam emitted from the light emitting window 12a passes through the opening 84.

As shown in Figs. 8B, 8D, and 8E, the contact portion 81 includes a first protrusion 81a and a second protrusion 81b, which protrude from both sides of a middle portion 82b of the flat portion 82 (described below). The first protrusion 81a is pressed against the cylindrical lens 23. The second protrusion 81b is pressed against the light emitting window 12a when the photoelectric sensor 10 is mounted on the attachment 20.

The first protrusion 81a is placed in the through-hole 21d, and is fitted between the upper rim 21au and the lower rim 21ad and comes in contact with a surface 23a of the cylindrical lens 23 as shown in Fig. 10A described below.

### 3-2-2 Flat Portion 82

As shown in Figs. 8A to 8E, the flat portion 82 arranged along the circumference of the contact portion 81 extends outwardly in a direction substantially perpendicular to the direction in which the contact portion 81 is compressed (that can be referred to as an optical axis direction). When mounted onto the accommodating unit 21, the flat portion 82 extends along an inner surface 21c of the accommodating unit 21 (refer to Figs. 5B and 5C).

The flat portion 82 extends at the entire circumference of the contact portion 81, and is mainly long in the vertical direction. The flat portion 82 includes the middle portion 82b, which is at the circumference of the contact portion 81, an upper portion 82a arranged above the middle portion 82b, and a lower portion 82c arranged below the middle portion 82b. A step 82j is between the upper portion 82a and the middle portion 82b on the front surface 80a. As a result, the upper portion 82a is thicker than the middle portion 82b. A step 82k is between the middle portion 82b and the lower portion 82c on the front surface 80a. As a result, the lower portion 82a is thicker than the middle portion 82b. No step is formed between the upper portion 82a and the middle portion 82b and between the middle portion 82b and the lower portion 82c on the back surface 80b. More specifically, the middle portion 82b of the flat portion 82, defining the circumference of the contact portion 81, is a recess 82g in Figs. 8B and 8E.

Positioning holes 82d for setting the sealant 80 on the accommodating unit 21 are formed at horizontally opposite positions in the upper portion 82a and at horizontally opposite positions in the lower portion 82c. As shown in Fig. 5C, the recesses 24 are formed on the accommodating unit 21, and two positioning pins 25 extend from two separate positions on each of the upper recess 24a and the lower recess 24b in the cylindrical lens 23. The positioning holes 82d receive the positioning pins 25, which are used to position the sealant 80 on the accommodating unit 21.

As shown in Fig. 8E, the front surface 80a of the sealant 80 is substantially perpendicular to an optical axis O. The back surface 80b of the sealant 80 is inclined relative to the direction perpendicular to the optical axis O. This inclination corresponds to the inclination of about 2 degrees of a surface 12s of the light receiving window 12a relative to the direction perpendicular to the optical axis O. These surfaces 80a and 80b are substantially parallel to the surface 12s. In detail, when a plane perpendicular to the optical axis O is referred to as a plane P01 and a plane including the back surface 80b of the flat portion 82 is referred to as a plane P1, an angle θ1 formed by the plane P1 and the plane P01 when viewed horizontally is 2 degrees. When a plane perpendicular to the optical axis O is referred to as a plane P02 and a plane including the tip of the second protrusion 81b is referred to as a plane P2, an angle θ2 formed by the plane P2 and the plane P02 is also 2 degrees. The surface is inclined such that its upper portion is more frontward (in the traveling direction of the emitted light) than its lower portion.

As shown in Fig. 8E, when a plane including the planes of the upper portion 82a and the lower portion 82c of the front surface 80a is referred to as a plane P3, a height d1 of the first protrusion 81a from the plane P3 is higher than a height d2 of the second protrusion 81b (the distance from the plane P1 to the plane P2). A width W2 of the second protrusion 81b is wider than a width W1 of the first protrusion 81a.

The distance from the sealant 80 to the surface 23a of the cylindrical lens 23 is longer than the distance from the sealant 80 to the surface 12s of the light emitting window 12a, and thus a protruding height d1 of a first protrusion 81a is greater than a protruding height d2 of the second protrusion 81b. To achieve similar pressing forces from the first protrusion 81a onto the surface 23a and by the second protrusion 81b onto the surface 12s, a width W2 of the second protrusion 81b is greater than a width W1 of the first protrusion 81a.

As shown in Fig. 5C, recesses 24a and 24b are above and below the cylindrical lens 23 on the back surface of the accommodating unit 21. As shown in Figs. 5C and 6C, the upper recess 24a is rectangular, whereas the lower recess 24b has one inclined corner at the bottom corresponding to the chamfered portion 80c of the sealant 80. This shape prevents erroneous setting of the sealant 80 with its back surface 80b placed on the cylindrical lens 23 when the sealant 80 is set on the accommodating unit 21.

### Fixing Portion 83

Fixing the sealant 80 to the accommodating unit 21 of the attachment body 200 with adhesive will now be described.

As shown in Figs. 5B and 6C, the length of a part of the upper recess 24a from the upper rim 21au to an upper end surface 24c of the recess 24a is greater than the length of a part of the sealant 80 from the contact portion 81 to the upper end surface 82e. As shown in Figs. 5B and 6C, a gap 91 is formed between the upper end surface 82e of the sealant 80 and the upper end surface 24c of the recess 24a that face each other.

The length of a part of the lower recess 24b from the lower rim 21ad to a lower end surface 24d of the recess 24b is greater than the length of a part of the sealant 80 from the contact portion 81 to the lower end surface 82f. As shown in Figs. 5B and 6C, a gap 92 is formed between the lower end surface 82f of the sealant 80 and the lower end surface 24d of the recess 24b that face each other.

Adhesive is filled at the horizontally opposite ends of the gap 91 and the horizontally opposite ends of the gap 92, or at four positions in total (in areas T drawn with dotted lines in Fig. 6B). This fixes the sealant 80 to the accommodating unit 21.

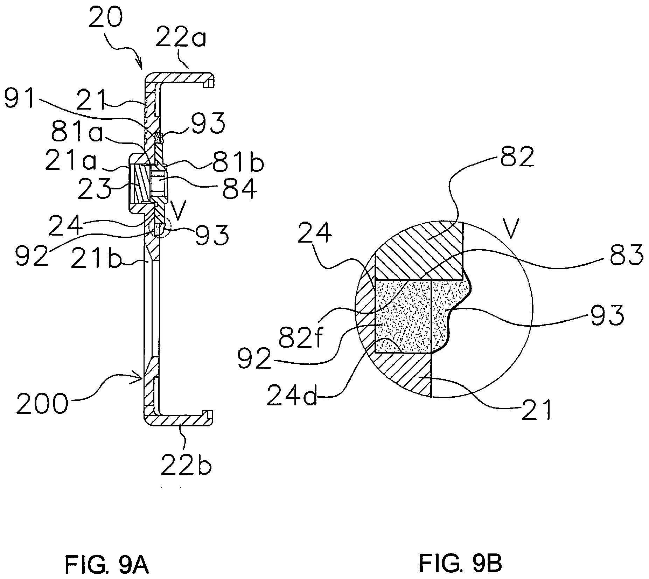

More specifically, the fixing portions 83 of the sealant 80 are fixed with the adhesive. The fixing portions 83 are end portions of the upper end surface 82e in the longitudinal direction, and end portions of the lower end surface 82f in the longitudinal direction. Fig. 9A is a cross-sectional view take along line B-B in Fig. 6. Fig. 9B is an enlarged view of area V in Fig. 9A. The lower end surface 82f of the sealant 80 is fixed in the manner described below. As shown in Fig. 9B, an adhesive 93 is filled in a gap 92 between the lower end surface 24d of the recess 24b and the lower end surface 82f of the sealant 80, and an adhesive 93 is filled in a gap 91 between the upper end surface 24c of the recess 24a and the upper end surface 82e of the sealant 80. The gaps 91 and 92 are used to store the adhesive. The sealant 80 is fixed to the accommodating unit 21 with adhesive at the four positions in total. As shown in Fig. 8A, a part of the flat portion 82 from the contact portion 81 to the fixing portion 83 functions as a connecting portion 85, which connects the fixing portion 83 and the contact portion 81. More specifically, the connecting portion 85 and the fixing portion 83 in the present embodiment are formed by the flat portion 82.

This fixing structure fixes the contact portion 81 to the accommodating unit 21 with the first protrusion 81a of the contact portion 81 being in contact with the back surface 23a of the cylindrical lens 23.

When the attachment 20 with this structure is mounted onto the photoelectric sensor 10, the second protrusion 81b of the contact portion 81 comes in contact with the surface 12s of the light emitting window 12a as shown in Figs. 10A and 10B. The first protrusion 81a is in contact with the back surface 23a of the cylindrical lens 23. The contact portion 81 of the sealant 80 seals the circumference of an area W where laser light passes in a small space between the surface 23a of the cylindrical lens 23 and the surface 12s of the light emitting window 12a. Figs. 10A is a partially enlarged view of Fig. 9A. Fig. 10B is a cross-sectional view taken along line E-E in Fig. 2A.

### Main Advantages

As described above, the sealant 80 is arranged between the cylindrical lens 23 and the light emitting window 12a, and the contact portion 81 seals the circumference of the area W where laser light passes in the small space between the surface 23a of the cylindrical lens 23 and the surface 12s of the light emitting window 12a. This structure prevents foreign matter or water droplets from entering the area W where laser light passes.

The contact portion 81 may be directly fixed to the surface 23s of the cylindrical lens 23 with adhesive to fix the accommodating unit 21 to the sealant 80. In that structure, the contact portion 81 is compressed between the cylindrical lens 23 and the light emitting window 12a. Repeatedly mounting the attachment 20 onto the photoelectric sensor 10 causes repeated compressing of the fixing adhesive. As a result, the fixing adhesive can easily come off.

However, the structure of the present embodiment includes the fixing portion 83 that is spaced from the contact portion 81. Repeatedly mounting the attachment 20 onto the photoelectric sensor 10 and thus repeatedly compressing the contact portion 81 will have little impact on the fixing portion 83. This achieves stable fixing.

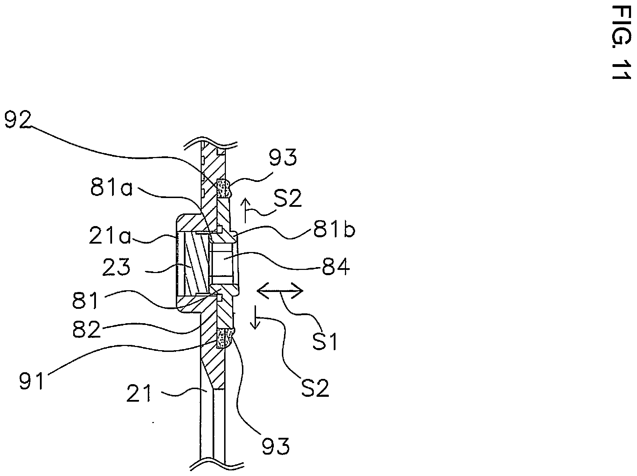

As shown in Fig. 11, the sealant 80 is fixed to the attachment body 200 with the adhesive 93 at the upper end surface 82e and the lower end surface 82f, which are perpendicular to the direction in which the contact portion 81 is compressed (arrow S1). When the contact portion 81 is compressed in the direction of the arrow S1, stress caused by the compression is applied to the flat portion 82 in the vertical direction (refer to arrows S2 and S3). More specifically, the upper portion 82a is pressed upward (arrow S2), whereas the lower portion 82c is pressed downward (arrow S3). In the present embodiment, the fixing portion 83 is arranged in the direction in which the stress is applied. The stress is applied in the direction in which the adhesive 93 is compressed. The adhesive is less likely to come off.

As described in the above embodiment, the recesses 82g are formed above and below the contact portion 81. This reduces the strength of the first protrusion 81a. The sealant 80 with dimensional errors can be inserted through the through-hole 21d along the upper and lower rims 21au and 21du of the through-hole 21d of the light emitting unit 21a accommodating the cylindrical lens 23. This structure prevents the sealant from being bent inward and disturbing the laser beam.

As described above, the back surface 80b of the sealant 80 is inclined with respect to the optical axis of the light emitting window 12a. This allows the second protrusion 81b of the sealant 80 to uniformly come in contact with the surface 12s of the light emitting window 12a.

At least the second protrusion 81b is inclined in conformance with the surface 12s of the light emitting window 12a, whereas the flat portion 82 may not be inclined. However, when the flat portion 82 is also inclined accordingly, a mold for shaping the sealant 80 is easy to prepare. This reduces the cost.

The protruding height d1 of the first protrusion 81a is set greater than the protruding height d2 of the second protrusion 81b. The width W2 of the second protrusion 81b is set greater than the width W1 of the first protrusion 81a. In this case, the pressing force from the first protrusion 81a against the surface 23a can be substantially the same as the pressing force from the second protrusion 81b against the surface 12s. This allows the protrusions to uniformly come in contact with the corresponding surfaces 23a and 12s, and achieves stable sealing.

### Second Embodiment

The photoelectric sensor 10 according to the first embodiment includes separate sections for light emission and light reception, and includes the light emitting window 12a and the light receiving window 12b, which are separate windows for emission and reception. A photoelectric sensor 310 according to a second embodiment includes an integrated section for light emission and light reception, or includes a light emitting window and a light receiving window that are integrated together.

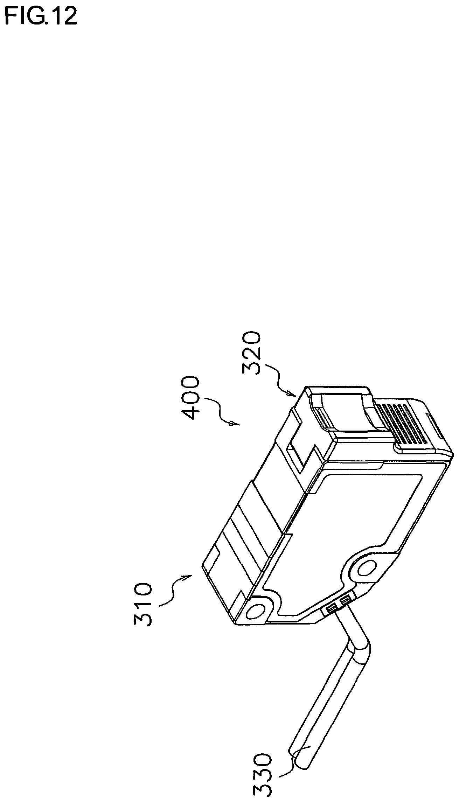

An attachment 320 according to the second embodiment of the invention and a photoelectric sensor unit 400 on which the attachment 320 is mounted will be described with reference to Figs. 12 to 21B.

In the description below, the direction being forward or backward refers to the direction determined by assuming that the surface onto which a laser beam is applied from the photoelectric sensor unit 400 is the front surface. The direction being upward or downward and the direction being vertical is the direction along the long axis of a front surface 311a of the photoelectric sensor unit 400. The direction to the left or to the right or being horizontal is the forward or backward direction and the direction orthogonal to the long axis direction.

### Overall Structure of the Photoelectric Sensor Unit 400

Fig. 12 is a perspective view showing the appearance of the photoelectric sensor unit 400 according to the second embodiment.

As shown in Fig. 12, the photoelectric sensor unit 400 according to the present embodiment includes a photoelectric sensor 310, which is a retroreflective photoelectric sensor that receives reflected light of its emitted light and detects the presence of a detection target (target). The photoelectric sensor unit 400 is used as, for example, a photoelectric switch, an optical distance determination sensor, or an optical displacement sensor. As shown in Fig. 12, the photoelectric sensor unit 400 includes the photoelectric sensor 310, an attachment 320, and a cord 330.

### 1. Photoelectric Sensor 310

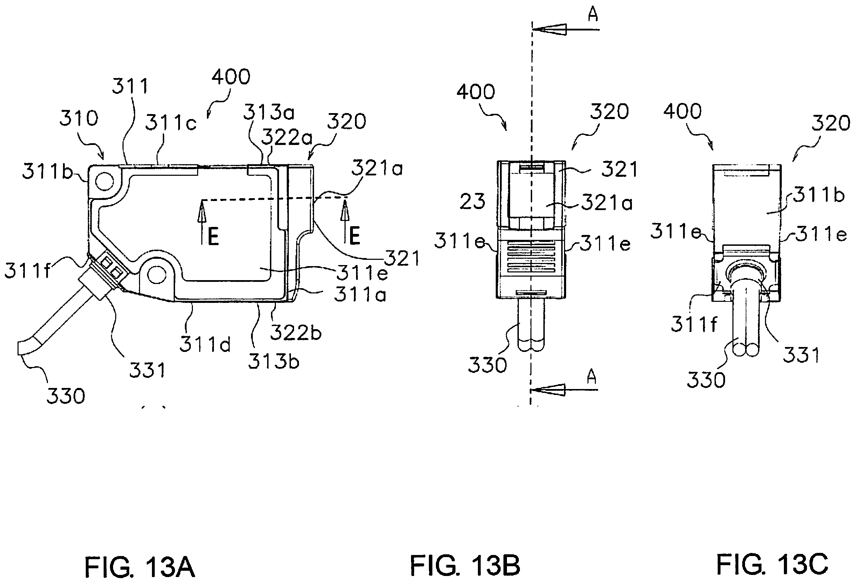

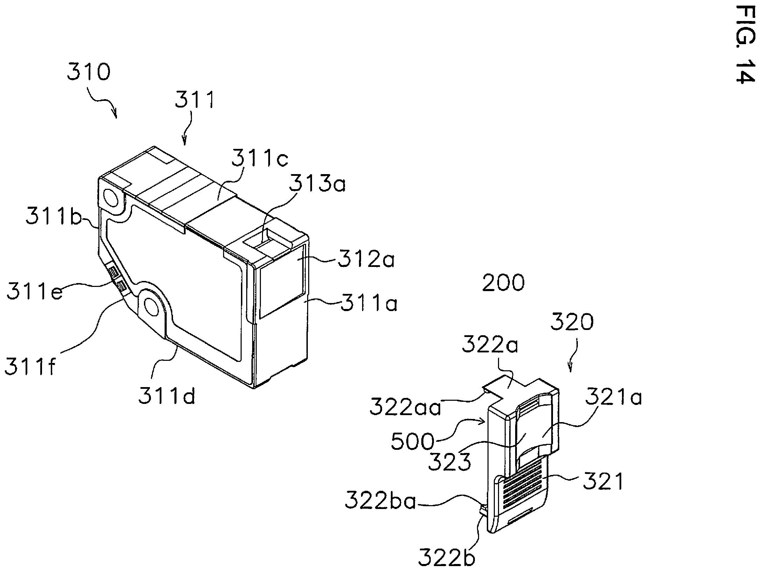

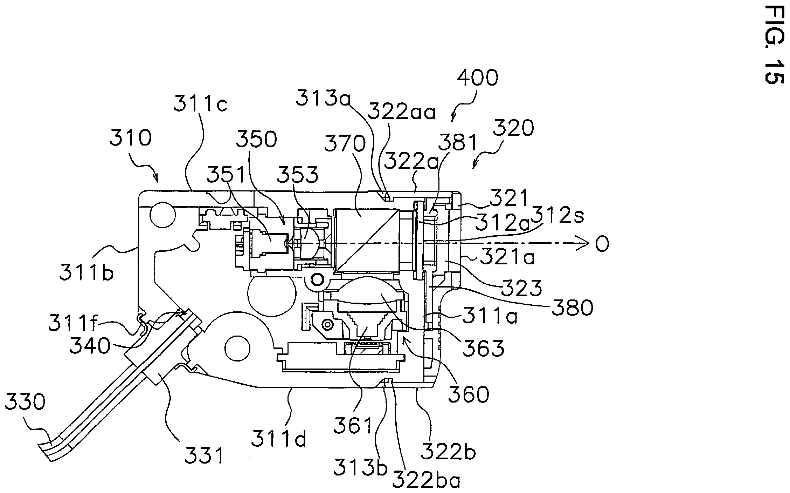

Fig. 13A is a side view of the photoelectric sensor unit 400. Fig. 13B is a front view of the photoelectric sensor unit 400. Fig. 13C is a rear view of the photoelectric sensor unit 400. Fig. 14 is a perspective view showing the appearance of the photoelectric sensor 310 from which the attachment 320 has been removed. Fig. 15 is a cross-sectional view taken along line A-A in Fig. 13B.

As shown in Fig. 15, the photoelectric sensor 310 includes a connecting portion 340, a light emitting unit 350, a driving mechanism 360, and a deflection beam splitter 370 (described below) as its internal components. As shown in Figs. 13A to 13C, the photoelectric sensor 310 further includes an enclosure 311 and a light emitting and receiving window 312a. An attachment 320 is mounted on the photoelectric sensor 310 at a front surface 311a of the enclosure 311 in which the light emitting and receiving window 312a is formed. The attachment 320 is mounted on the photoelectric sensor 310. The attachment 320 is mounted on the front surface 311a of the enclosure 311 on which the light emitting and receiving window 312a is arranged. In the present embodiment, the front surface 311a is watertight. The entire enclosure 311 may be watertight.

The enclosure 311 is a boxlike member defining the contour of the photoelectric sensor 310. The enclosure 311 includes seven surfaces, that is, the front surface 311a, a back surface 311b, an upper surface 311c, a lower surface 311d, two side surfaces 311 e and 311e, and an inclined surface 311f.

The front surface 311a is the surface from which light is emitted toward the detection target and at which the reflected light is received. As shown in Fig. 13A and other figures, the attachment 320 is mounted on the front surface 311a. As shown in Fig. 14, the front surface 311a includes the light emitting and receiving window 312a for emitting light and receiving the emitted light and guiding it into the enclosure 311, which is arranged in the upper half of the front surface 311a.

As shown in Figs. 13A and 13B, the back surface 311b is opposite to the front surface 11a for emitting and receiving light.

The upper surface 311c joins the upper end of the front surface 311a and the upper end of the back surface 311b, and defines the ceiling of the enclosure 311. As shown in Fig. 15, the upper surface 311c includes, at a position near the front surface 311a, an engagement groove 313a, which is engaged with an engagement portion 322aa of a catch portion 322a of the attachment 320.

The lower surface 311d is opposite to the upper surface 311c. The lower surface 311d joins the lower end of the front surface 311a and the lower end of the back surface 311b, and defines the bottom of the enclosure 311. As shown in Fig. 15, the lower surface 311d includes, at a position near the front surface 311a, an engagement groove 313b, which is engaged with an engagement portion 322ba of a catch portion 322b of the attachment 320.

The two side surfaces 311e are substantially trapezoidal flat portions defining the sides of the photoelectric sensor 310.

As shown in Fig. 13A, the inclined surface 311f, which is arranged below the back surface 311b, is inclined relative to the back surface 311b and to the lower surface 311d. A cord holder 331 of a cord 330 is fixed to the inclined surface 311f.

The light emitting and receiving window 312a allows light from the light emitting unit 350 (described below) (refer to Fig. 15) arranged in the enclosure 311 to be emitted out of the sensor. The surface of the light emitting window 312a is inclined by about 2 degrees relative to the optical axis of the emitted light to prevent the light that has been emitted out of the light emitting unit 350 from being reflected on the surface of the light emitting and receiving window 312a and entering a power monitor of the light emitting unit 350.

The internal components of the photoelectric sensor 310 will be described below in detail.

### 1-1 Connecting Portion 340

As shown in Fig. 15, the connecting portion 340 is arranged at a lower position on the back surface 311b within the enclosure 311 of the photoelectric sensor 310. The connecting portion 340 comes in contact with a plurality of terminals arranged on the cord holder 331 to electrically connect the cord 330 and the photoelectric sensor 310.

As a result, the amplifier (not shown) and the photoelectric sensor 310 electrically connect to each other with the cord 330, allowing a drive voltage to be provided to the photoelectric sensor 310 and a detection signal from the photoelectric sensor 310 to be received by the amplifier, which can then determine the presence of the detection target and other information.

### 1-2 Light Emitting Unit 350

The light emitting unit 350 emits light toward the detection target. As shown in Fig. 15, the enclosure 311 of the photoelectric sensor 310 accommodates the light emitting unit 350, a deflection beam splitter 370, and a light emitting and receiving window 312a, which are arranged in the stated order from the back surface 311b toward the front surface 311a. The light emitting unit 350 includes a laser diode (LD) 351 and a transmitter lens 353.

The LD 351, which is a light source for emitting laser light having a predetermined wavelength, is arranged at the lowermost position of the light emitting unit 350 in the direction of the optical axis O. In detail, as shown in Fig. 15, the LD 351 is arranged at a position slightly nearer the upper surface 311c in the middle of the enclosure 311. In the present embodiment, the LD 351 is fixed inside the photoelectric sensor 310.

The transmitter lens 353 focuses the laser beam and guides the beam toward the light emitting and receiving window 312a.

### 1-3 Light Receiving Unit 360

The light receiving unit 360 receives reflected light of the laser light emitted from the light emitting unit 350 toward the detection target, and detects the amount of the reflected light. As shown in Fig. 15, the light receiving unit 360 is arranged below the beam splitter 370, and includes a receiver lens 361, a light receiving element 363, and other components.

The receiver lens 361 focuses reflected light of the laser light emitted from the light emitting unit 350 onto the detection target, and guides the light onto the light receiving element 363.

The light receiving element 363 receives the light reflected by the deflection beam splitter 370 and passes through the receiver lens 361, and outputs a light receiving signal generated in accordance with the received amount of the reflected light. The light receiving signal is transmitted to an amplifier (not shown) via the connecting portion 340 and the cord 331. As a result, the amplifier can determine the presence of the detection target and other information based on, for example, the level of the light receiving signal.

### 1-4 Deflection Beam Splitter 370

As shown in Fig. 15, the deflection beam splitter 370 is arranged in front of the light emitting unit 350 and above the light receiving unit 360.

The deflection beam splitter 370 allows laser light emitted from the light emitting unit 350 and deflected in a predetermined direction to pass through, and reflects laser light reflected on a retroreflective plate (not shown) and deflected in a different direction toward the light receiving unit 360.

### 2. Cord 330

The cord 330 is connected to an amplifier (not shown) and the photoelectric sensor 310. In detail, as shown in Fig. 15, the cord 330 is connected to the connecting portion 340 arranged in the photoelectric sensor 310 with the cord holder 331.

This structure allows a drive voltage provided from the amplifier and various signals transmitted between the amplifier and the photoelectric sensor 310 to be transmitted and received with the cord 330.

### 3. Attachment 320

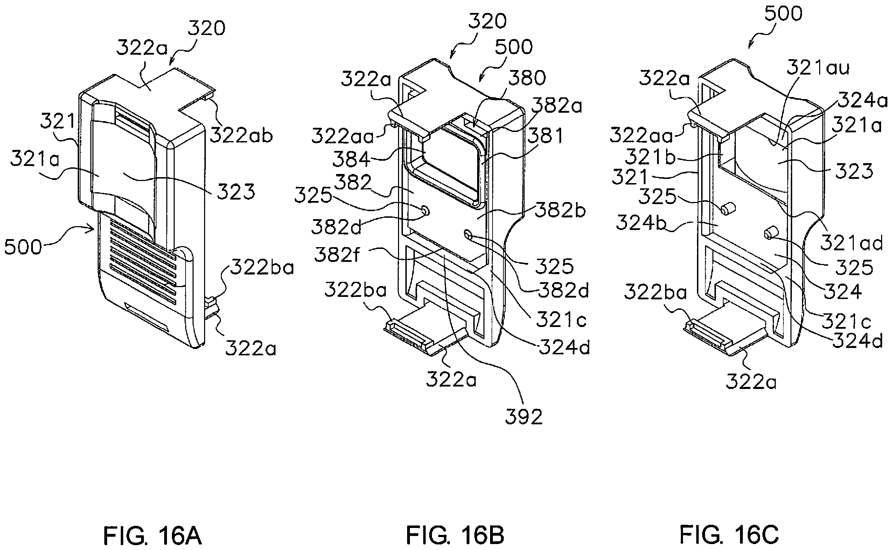

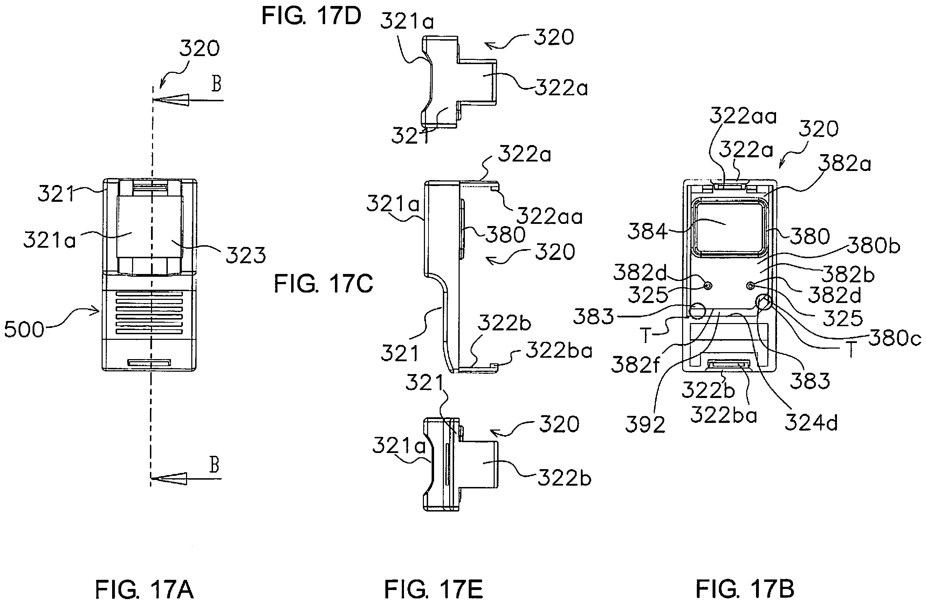

Fig. 16A is a perspective view of the attachment 320 as viewed from the front. Fig. 16B is a perspective view of the attachment 320 as viewed from the rear. Fig. 16C shows the attachment in Fig. 16B from which a sealant 380 has been removed. Figs. 17A to 17E are a front view, a rear view, a side view, a top view, and a bottom view of the attachment 320.

As shown in Figs. 16A and 16B and Figs. 17A to 17E, the attachment 320 is capable of shaping a light beam emitted from the light emitting and receiving window 312a of the photoelectric sensor 310. The attachment 320 includes an attachment body 500 and the sealant 380 (refer to Fig. 16B).

### 3-1 Attachment Body 500

The attachment body 500 includes an accommodating unit 321, catch portions 322a and 322b, and a cylindrical lens 323.

The cylindrical lens 323 is attached to the accommodating unit 321. The accommodating unit 321 is a flat member arranged in proximity of and along the front surface 311a of the photoelectric sensor 310 when the attachment 320 is mounted on the photoelectric sensor 310. The accommodating unit 321 includes a light emitting and receiving unit 321a.

As shown in Figs. 16A and 17A to 17C, the light emitting and receiving portion 321a is arranged in the upper half of the accommodating unit 321. The light emitting and receiving portion 321a is placed in front of the light emitting and receiving window 312a of the photoelectric sensor 310 when the attachment 320 is mounted on the photoelectric sensor 310. As shown in Fig. 16C, the light emitting and receiving unit 321a has a through-hole 321b, which accommodates the cylindrical lens 323. Light emitted through the light emitting and receiving window 312a of the photoelectric sensor 310 is emitted out of the sensor after passing through the cylindrical lens 323, which is attached to the light emitting and receiving unit 321a. The through-hole 321d has an upper rim 321au and a lower rim 321ad shown in Fig. 16C.

As shown in Figs. 16A and 16B and Figs. 17B to 17E, the catch portions 322a and 322b are elastic members for mounting the attachment 320 onto the photoelectric sensor 310. The catch portions 322a and 322b are arranged to protrude perpendicularly from the upper end and the lower end of the accommodating unit 321. The catch portions 322a and 322b include engagement portions 322aa and 322bb at the distal ends of their flat portions that are parallel to the upper surface 311c and the lower surface 311d of the photoelectric sensor 310 when the attachment 320 is mounted on the photoelectric sensor 310.

As shown in Fig. 16B and Fig. 17C, the engagement portions 322aa and 322bb protrude downward and upward from the flat portions of the catch portions 322a and 322b. When the attachment 320 is mounted on the photoelectric sensor 310, the catch portions 322a and 322b of the engagement portions 322aa and 322bb deform elastically and move along the upper surface 311c and the lower surface 311d, and are engaged with the engagement grooves 313a and 313b (refer to Fig. 14 and Fig. 15) at their mounting positions as shown in Fig. 16. This fixes the attachment 320 on the photoelectric sensor 310.

### 3-2 Sealant 380

As shown in Fig. 16B, Fig. 16C, and Fig. 17B, the sealant 380 is arranged inside the cylindrical lens 323, and is fixed to a recess 324 formed on the accommodating unit 321 (refer to Fig. 16C) with adhesive.

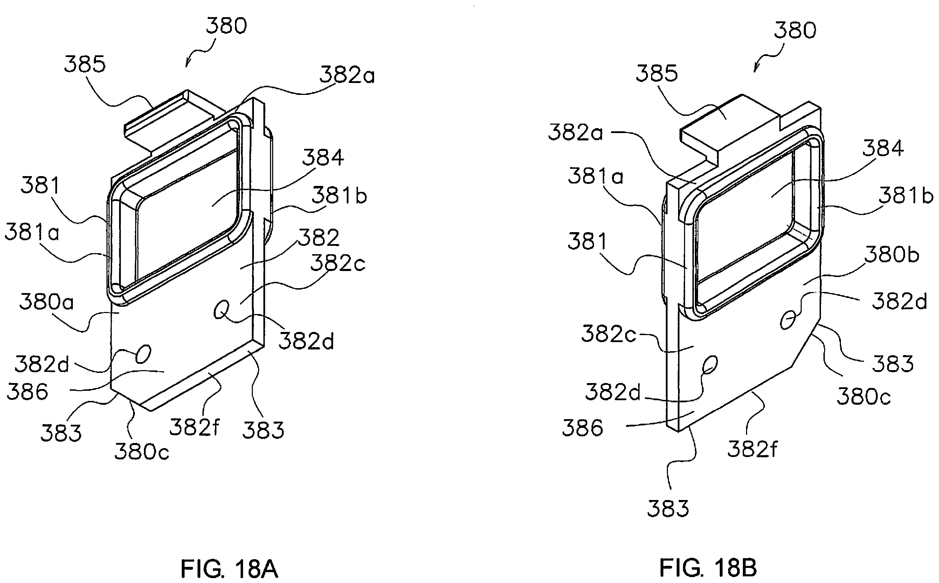

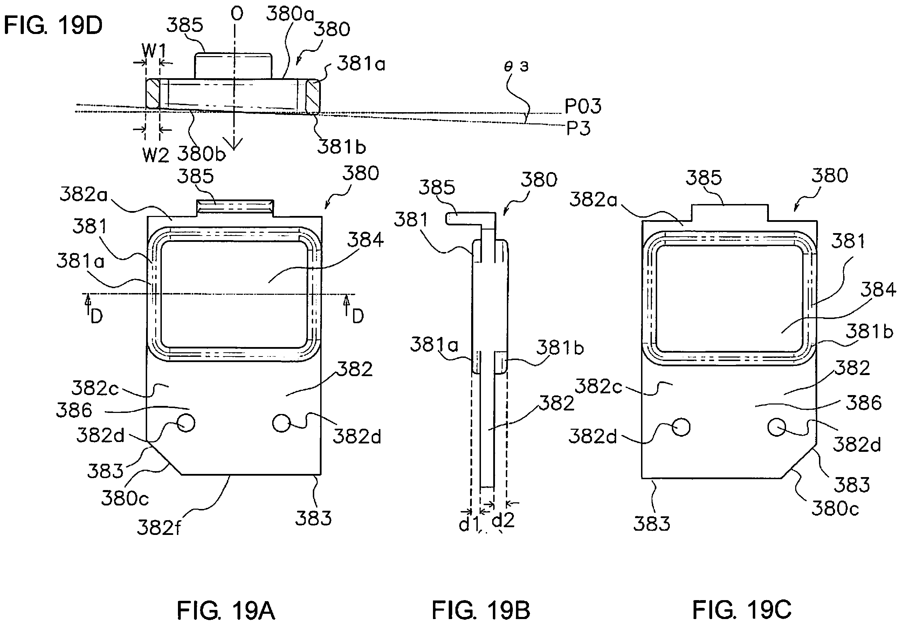

Fig. 18A is a perspective view of the sealant 380 as viewed from the front (from the cylindrical lens 323). Fig. 18B is a perspective view of the sealant 380 as viewed from the rear (from the photoelectric sensor 310). Figs. 19A to 19C are a front view, a side view, and a rear view of the sealant 380. Fig. 19D is a cross-sectional view taken along line D-D in Fig. 19A.

As shown in Figs. 18A and 18B and Figs. 19A and 19C, the sealant 380 is a substantially rectangular member in which a horizontally long rectangular opening 384 as viewed from the front is formed. The sealant 380 is made of elastic material such as rubber. The sealant 380 includes a chamfered portion 380c at one of its vertexes.

The sealant 380 includes a contact portion 381, a flat portion 382, fixing portions 383, and a protrusion 385. When the surface of the sealant 380 nearer the cylindrical lens 323 is referred to as a front surface 380a, the surface of the sealant 380 nearer the photoelectric sensor 310 when the attachment 320 is mounted on the photoelectric sensor 310 is referred to as a back surface 380b.

### 3-2-1 Contact Portion 381

The contact portion 381 is a substantially tubular member defining the rectangular opening 384. When the attachment 320 is mounted on the photoelectric sensor 310, the contact portion 381 is sandwiched and compressed between the cylindrical lens 323 and the light emitting window 312a as shown in Fig. 15. The contact portion 381 is arranged to define an area from which a laser beam is emitted so that the contact portion 381 does not disturb the laser beam. The laser beam emitted from the light emitting and receiving window 312a passes through the opening 384.

As shown in Figs. 19B and 19D, the contact portion 381 includes a first protrusion 381a and a second protrusion 381b, which protrude from both sides of a flat portion 382 (described below). The first protrusion 381a is pressed against a surface 323a of the cylindrical lens 323. The second protrusion 381b is pressed against a surface 312s of the light emitting and receiving window 312a when the photoelectric sensor 310 is mounted on the attachment 320.

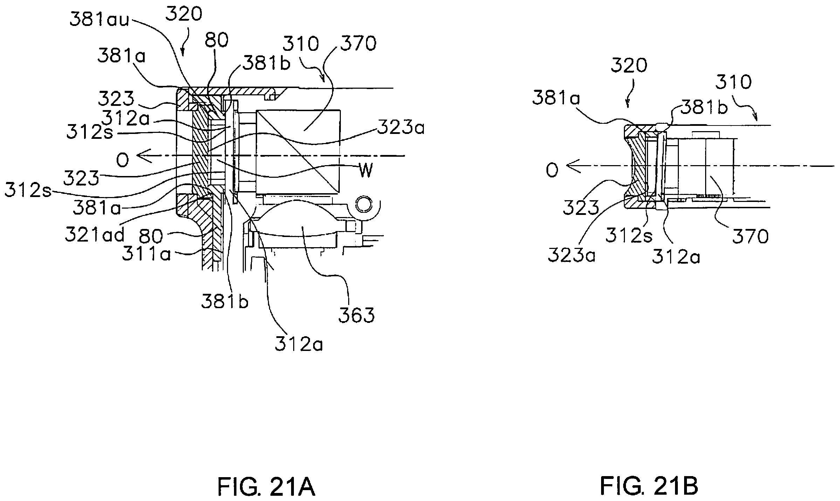

The first protrusion 381a is placed in the through-hole 321d, and is fitted between the upper rim 321au and the lower rim 321ad and comes in contact with a surface 323a of the cylindrical lens 323 as shown in Fig. 21A described below.

### 3-2-2 Flat Portion 382

As shown in Fig. 18 and Fig. 19, the flat portion 382 arranged along the circumference of the contact portion 381 extends outwardly in a direction substantially perpendicular to the direction in which the contact portion 381 is compressed (that can be referred to as an optical axis direction). When mounted onto the accommodating unit 321, the flat portion 382 extends along an inner surface 321c of the accommodating unit 321 (refer to Figs. 16B and 16C).

As shown in Fig. 19A, the flat portion 382 includes an upper portion 382a arranged above the contact portion 381, and a lower portion 382c arranged below the contact portion 381. The upper portion 382a is a thin portion extending upward, whereas the lower portion 382c is a large portion extending downward.

Positioning holes 382d for setting the sealant 380 on the accommodating unit 321 are formed at horizontally opposite positions in the lower portion 382c in substantially the middle in the vertical direction. As shown in Fig. 16C, the recesses 324 are formed on the accommodating unit 321, and two positioning pins 325 extend from two separate positions below the cylindrical lens 323 of the recess 324 formed on the accommodating unit 321. The positioning holes 382d receive the positioning pins 325, which are used to position the sealant 380 on the accommodating unit 321.

Further, as shown in Fig. 19D, the front surface 380a of the sealant 380 is substantially perpendicular to an optical axis O, whereas the back surface 380b of the sealant 380 is inclined relative to the direction perpendicular to the optical axis O. The surface is inclined vertically in the first embodiment, whereas the surface is inclined horizontally in the second embodiment. More specifically, the light emitting and receiving window 312a is inclined horizontally by about 2 degrees relative to the direction perpendicular to the optical axis O, whereas the surface 312s of the light emitting and receiving window 312 and the front surface 380a of the sealant 380 are substantially parallel to each other.

In detail, when a plane perpendicular to the optical axis O is referred to as a plane P03 and a plane including the tip of the second protrusion 381b is referred to as a plane P3, an angle θ1 formed by the plane P3 and the plane P03 is about 2 degrees. The surface is inclined such that its left portion is more frontward (in the traveling direction of the emitted light) than its right portion.

A protruding height d1 of a first protrusion 381a from the flat portion 382 is substantially the same as a protruding height d2 of a second protrusion 381b from the flat portion 382. A width W2 of the second protrusion 381b is also substantially the same as a width W1 of the first protrusion 381a.

As shown in Fig. 16C, recesses 324a and 324b are above and below the cylindrical lens 323 on the back surface of the accommodating unit 321. As shown in Figs. 16C and 17C, the lower recess 324b has one inclined corner at the bottom corresponding to the chamfered portion 380c of the sealant 380. This shape prevents erroneous setting of the sealant 380 with its back surface 380b placed on the cylindrical lens 323 when the sealant 380 is set on the accommodating unit 321.

### 3-2-3 Protrusion 385

As shown in Figs. 18A and 18B, the protrusion 385 is a member for fixing, together with the fixing portions 383 (described below), the sealant 380 to the attachment body 500. The protrusion 385 protrudes from an upper end of an upper portion 382a of the flat portion 382 substantially perpendicularly to the flat portion 382.

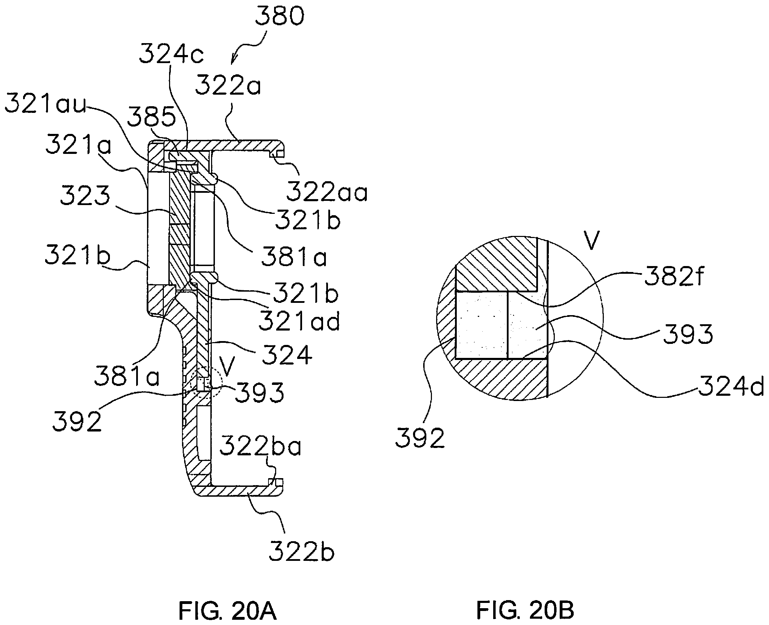

Fig. 20A is a cross-sectional view taken along line B-B in Fig. 17A. As shown in Fig. 20A, an insertion hole 324c, which extends in the optical axis direction, is formed above the recess 324a of the accommodating unit 321. The protrusion 385 is fitted into the insertion hole 324c to fix the sealant 80 to the accommodating unit 321.

### 3-2-4 Fixing Portion 383

Fixing the sealant 380 to the accommodating unit 321 of the attachment body 500 with adhesive will now be described.

As shown in Figs. 16B, 16C, and 17C, the length of a part of the lower recess 324b from the lower rim 321ad to a lower end surface 324d of the recess 324b is greater than the length of a part of the sealant 380 from the contact portion 381 to the lower end surface 382f. As shown in Figs. 16B and 17C, a gap 392 is formed between the lower end surface 382f of the sealant 380 and the lower end surface 324d of the recess 324b that face each other.

Adhesive is filled at the horizontally opposite ends of the gap 392 (in areas T drawn with dotted lines in Fig. 17C). This fixes the sealant 380 to the accommodating unit 321.

More specifically, the fixing portions 383 of the sealant 380 are portions of the sealant 380 fixed with the above adhesive. The fixing portions 383 are end portions of the lower end surface 82f in the longitudinal direction. In the present embodiment, one of the fixing portions 383 is arranged at the chamfered portion 380c of the lower end surface 82f.

Fig. 20B is an enlarged view of area V in Fig. 20A. The lower end surface 382f of the sealant 380 is fixed in the manner described below. As shown in Fig. 20B, an adhesive 393 is filled in a gap 392 between the lower end surface 324d of the recess 324b and the lower end surface 382f of the sealant 380. The gap 392 is used to store the adhesive. The sealant 380 is fixed to the accommodating unit 321 with adhesive at the two positions in total (refer to Fig. 17B). As shown in Fig. 19A, a part of the lower portion 382c excluding the fixing portion 383 functions as a connecting portion 386, which connects the fixing portion 383 and the contact portion 381. More specifically, the connecting portion 386 and the fixing portion 383 in the present embodiment are formed by the lower portion 382c.

This fixing structure fixes the contact portion 381 to the attachment body 500 with the protrusion 381a of the contact portion 381 being in contact with the back surface 323a of the cylindrical lens 323.

When the attachment 320 with this structure is mounted onto the photoelectric sensor 310, the second protrusion 381b of the contact portion 381 comes in contact with the surface 312s of the light emitting and receiving window 312a as shown in Figs. 21A and 21B. The first protrusion 381a is in contact with the back surface 323a of the cylindrical lens 323. The contact portion 381 of the sealant 380 seals the circumference of an area W where laser light passes in a small space between the surface 323a of the cylindrical lens 323 and the surface 312s of the light emitting and receiving window 312a.

### Main Advantages

As described above, the contact portion 381 is arranged between the cylindrical lens 323 and the light emitting and receiving window 312a, and the contact portion 381 seals the circumference of the area W where laser light passes in the small space between the surface 323a of the cylindrical lens 323 and the surface 312s of the light emitting and receiving window 312a. This structure prevents foreign matter or water droplets from entering the area W where laser light passes.

The contact portion 381 may be directly fixed to the surface 323s of the cylindrical lens 323 with adhesive to fix the accommodating unit 321 to the sealant 380. In that structure, the contact portion 381 is compressed between the cylindrical lens 323 and the light emitting and receiving window 312a. Repeatedly mounting the attachment 20 onto the photoelectric sensor 310 causes repeated compressing of the fixing adhesive. As a result, the fixing adhesive can easily come off.

However, the structure of the present embodiment includes the fixing portion 383 that is spaced from the contact portion 81. Repeatedly mounting the attachment 320 onto the photoelectric sensor 310 and thus repeatedly compressing the contact portion 381 will have little impact on the fixing portion 383. This achieves stable fixing.

In the present embodiment, the sealant 380 is fixed to the attachment body 500 with the adhesive 393 at the lower end surface 382f, which is perpendicular to the direction in which the contact portion 381 is compressed. When the contact portion 381 is compressed, stress caused by the compression is applied to the flat portion 382 downward. More specifically, the lower portion 382c is pressed downward. In the present embodiment, the fixing portion 383 is arranged in the direction in which the stress is applied. The stress is applied in the direction in which the adhesive 393 is compressed. The adhesive is less likely to come off.

### Other Embodiments

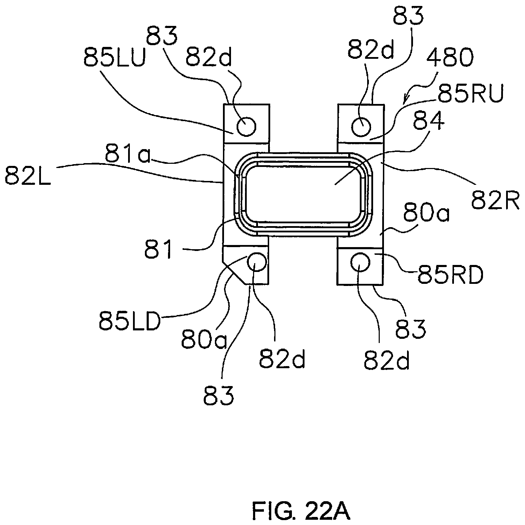

Although the embodiments of the present invention have been described, the invention should not be limited to the above embodiments. Various modifications are possible without departing from the scope of the claims.
(A) In the above embodiments, the connecting portion 85 connecting the contact portion 81 and the fixing portion 83 is a part of the flat portion 82. The invention should not be limited to this structure.
   For example, the sealant may have the structure of a sealant 480 shown in Fig. 22. The sealant 480 shown in Fig. 22 differs from the sealant 80 of the first embodiment in that the middle part of the flat portion 82 is eliminated, and the sealant 480 includes a left flat portion 82L and a right flat portion 82R, which are separate from each other. An upper end part of the left flat portion 82L functions as the fixing portion 83. Apart of the left flat portion 82L between the fixing portion 83 and the contact portion 81 functions as a connecting portion 85LU. A lower end part of the left flat portion 82L functions as the fixing portion 83. A part of the left flat portion 82L between the fixing portion 83 and the contact portion 81 functions as a connecting portion 85LD. An upper end part of the left flat portion 82R functions as the fixing portion 83. Apart of the right flat portion 82R between the fixing portion 83 and the contact portion 81 functions as a connecting portion 85RU. An upper end part of the right flat portion 82R functions as the fixing portion 83. A part of the right flat portion 82R between the fixing portion 83 and the contact portion 81 functions as a connecting portion 85RD. The left flat portion 82L and the right flat portion 82R each include a step both above and below the contact portion 81 in the same manner as in the first embodiment.
(B) In the above embodiments, the fixing portions 83 and 383 are arranged at the end surfaces that are spaced furthest from the contact portions 81 and 381 to minimize impact from compressive deformation of the contact portions 81 and 381. The fixing portions 83 and 383 may not be arranged at such positions. The fixing portions 83 and 383 are at least spaced from the contact portions 81 and 381 to reduce coming off of the adhesive as compared with the fixing portions 83 and 383 directly fixing the contact portions 81 and 381.
(C) In the above embodiments, the adhesives 93 and 393 are filled only at the horizontally opposite ends of the gaps 91, 92, and 392. Alternatively, the adhesives 93 and 393 may be filled entirely in the gaps 91, 92, and 392.
(D) Although the sealants 80 and 380 are fixed to the accommodating units 21 and 321 with the fixing portions 83 and 383 by using the adhesives 93 and 393, the sealants may be fixed by methods other than the use of the adhesives. For example, the sealants 80 and 383 may be fixed by using, for example, UV curable resin, or by thermally melting the material of the sealants 80 and 383, which may for example be rubber, or by using laser fusion. Any method that can fix the sealants 80 and 380 to the fixing portions 83 and 383 can be used.
(E) In the above embodiments, the cylindrical lens 23 is used as an example of a light transmissive element. However, the invention should not be limited to this structure.
   Any element that transmits light may be used. For example, the light transmissive element may be a prism that changes the direction of a laser beam.
(F) In the above embodiments, the LD (laser diode) 51 is used as an example of a light emitting unit. However, the invention should not be limited to this structure.
   For example, a light emitting diode (LED) may be used as the light emitting unit instead of the LD.
(G) In the above embodiments, the attachments 20 and 320 are used for the photoelectric sensors 10 and 310. However, the invention should not be limited to such applications.

For example, the invention is also applicable to other apparatuses that are expected to produce advantageous effects by increasing the freedom in changing the shape of the emitted light, such as laser machining apparatuses.

### Industrial Applicability

The attachment of the present invention for an optical component prevents foreign matter or water from entering a gap between the optical component and the attachment, and is usable for an optical component such as a photoelectric sensor.

### REFERENCE SIGNS LIST

10 photoelectric sensor (an example of an optical component)
11 enclosure
11a front surface (an example of a part of a photoelectric sensor where an optical-component light passing unit is arranged)
11b back surface
11c upper surface
11d lower surface
12a light emitting window (an example of an optical-component light passing unit)
12b light receiving window
12s surface (an example of a surface of an optical-component light passing unit facing a light transmissive element)
13a, 13b engagement groove
20 attachment
21 accommodating unit (an example of an accommodating unit)
21a light emitting unit
21au upper rim
21ad lower rim
21b opening
21c surface (an example of a surface of an accommodating unit)
21d through-hole
22a, 22b catch portion (an example of an attachment unit)
22aa, 22ba engagement portion
23 cylindrical lens (an example of a light transmissive element)
23a surface (an example of a surface of a light transmissive element facing an optical-component light passing unit)
24 recess
24a upper recess
24b lower recess
24c upper end surface (an example of a facing portion)
24d lower end surface (an example of a facing portion)
25 positioning pin
30 cord
31 cord holder
40 connecting portion
50 light emitting unit
51 LD (Laser Diode)
52 lens holder
52a slit
52b shaft-receiving hole
53 transmitter lens
60 driving mechanism
61 operational part
62 rotational axis
63 shaft
70 light receiving unit
71 receiver lens
72 filter
73 light receiving element
80 sealant
80a front surface
80b back surface
80c chamfered portion
81 contact portion
81a first protrusion
81b second protrusion
82 flat portion
82a upper portion
82b middle portion
82c lower portion
82d positioning hole
82e upper end surface (an example of an end in a direction along a surface)
82f lower end surface (an example of an end in a direction along a surface)
82g recess
82j, 82k step
83 fixing portion
84 opening
85 connecting portion
91, 92 gap
93 adhesive
100 photoelectric sensor unit
200 attachment body
310 photoelectric sensor
311a front surface (an example of a portion of a photoelectric sensor where an optical-component light passing unit is arranged)
311b back surface
311c upper surface
311d lower surface
311e side surface
311f inclined surface
312a light emitting and receiving window (an example of an optical-component light passing unit)
312s surface (an example of a surface of an optical-component light passing unit facing a light transmissive element)
313a, 313b engagement groove
320 attachment
321 accommodating unit (an example of an accommodating unit)
321a light emitting and receiving unit
321au upper rim
321ad lower rim
321b through-hole
322a, 322b catch portion
322aa, 322ba engagement portion
323 cylindrical lens (an example of a light transmissive element)
323a surface (an example of a surface of a light transmissive element facing an optical-component light passing unit)
324c insertion hole
324 recess
324a upper recess
324b lower recess
324d lower end surface (an example of a facing portion)
325 positioning pin
330 cord
331 cord holder
340 connecting portion
350 light emitting unit
351 LD (Laser Diode)
353 transmitter lens
360 light receiving unit
361 receiver lens
363 light receiving element
370 deflection beam splitter
380 sealant
380a front surface
380b back surface
380c chamfered portion
381 contact portion
381a first protrusion
381b second protrusion
382 flat portion
382a upper portion
382c lower portion
382d positioning hole
382f lower end surface (an example of an end in a direction along a surface)
383 fixing portion
384 opening
385 protrusion
386 connecting portion
391, 392 gap
393 adhesive
400 photoelectric sensor unit
500 attachment body

## Claims

1. An attachment (20; 320) mountable onto a surface of an optical component (10; 310), the surface of the optical component (10; 310) including an optical-component light passing unit (12a; 312a) configured to transmit light, the attachment (20; 320) being capable of shaping a light beam transmitted through the optical-component light passing unit (12a; 312a) and comprising:
a light transmissive element (23; 323) configured to transmit light;
an accommodating unit (21; 321) configured to accommodate the light transmissive element (23; 323);
an attachment unit (22a; 22b) configured to attach the accommodating unit (21; 321) onto the optical component (10; 310) in such a manner that the light transmissive element (23; 323) faces the optical-component light passing unit (12a; 312a); and
**characterized by**
a sealant (80; 380; 480) configured to seal a light passing area (W) where light passes being included in a space between a surface (12s; 312s) of the optical-component light passing unit (12a; 312a) facing the light transmissive element (23; 323) and a surface (23a; 323a) of the light transmissive element (23; 323) facing the optical-component light passing unit (12a; 312a) when the attachment (20; 320) is mounted on the optical component (10; 310),
wherein the sealant (80; 380; 480) includes
a contact portion (81; 381) configured to be compressed by and come in contact with the surface (12s; 312s) of the optical-component light passing unit (12a; 312a) and the surface (23a; 323a) of the light transmissive element (23; 323) and seal a circumference of the light passing area (W) in the space when the attachment (20; 320) is mounted on the optical component (10; 310),
a fixing portion (83; 383) spaced outwardly from the contact portion (81; 381) and configured to fix the contact portion (81; 381) to the accommodating unit (21; 321), and
a connecting portion (40; 85; 340; 385; 385LU, 385LD, 385RU, 385RD) configured to connect the contact portion (81; 381) and the fixing portion (83; 383).

2. The attachment (20; 320) for an optical component (10; 310) according to claim 1, wherein
the fixing portion (83; 383) is arranged at an end (82e, 82f; 382f) of the sealant (80; 380; 480) in a direction along a surface (21c; 321c) of the accommodating unit (21; 321).

3. The attachment (20; 320) for an optical component (10; 310) according to claim 2, wherein
the accommodating unit (21; 321) includes a facing portion (24c, 24d; 324d) facing the fixing portion (83; 383),
the fixing portion (83; 383) and the facing portion (24c, 24d; 324d) have a gap (91, 92; 391, 392) therebetween, and
the fixing portion (83; 383) is fixed to the accommodating unit (21; 321) with an adhesive (93) placed in the gap (91, 92; 391, 392).

4. The attachment (20; 320) for an optical component (10; 310) according to claim 3, wherein
the fixing portion (83; 383) and the facing portion (24c, 24d; 324d) face each other in a direction substantially perpendicular to a direction in which the light transmissive element (23; 323) and the optical-component light passing unit (12a; 312a) face each other.

5. The attachment (20; 320) for an optical component (10; 310) according to any of claims 1 to 4, wherein
the contact portion (81; 381) includes
a first protrusion (81a; 381a) protruding from where the connecting portion (40; 85; 340; 385; 385LU, 385LD, 385RU, 385RD) is arranged toward the light transmissive element (23; 323), and
a second protrusion (81b; 381b) protruding from where the connecting portion (40; 85; 340; 385; 385LU, 385LD, 385RU, 385RD) is arranged toward an opposite to the light transmissive element (23; 323), and
the connecting portion (40; 85; 340; 385; 385LU, 385LD, 385RU, 385RD) extends from the contact portion (81; 381) along a surface (21c; 321c) of the accommodating unit (21; 321).

6. The attachment (20; 320) for an optical component (10; 310) according to claim 5, wherein
the connecting portion (40; 85; 340; 385; 385LU, 385LD, 385RU, 385RD) includes a step (82j, 82k) on a surface thereof where the first protrusion (81a; 381a) is arranged, and a part of the connecting portion (40; 85; 340; 385; 385LU, 385LD, 385RU, 385RD) around the first protrusion (81a; 381a) is thinner than other parts of the connecting portion (40; 85; 340; 385; 385LU, 385LD, 385RU, 385RD).

7. The attachment (20; 320) for an optical component (10; 310) according to claim 5 or 6, wherein
the second protrusion (81b; 381b) has a width (W2) greater than a width (W1) of the first protrusion (81a; 381a), and
the second protrusion (81b; 381b) protrudes by a smaller height than the first protrusion (81a; 381a).

8. The attachment (20; 320) for an optical component (10; 310) according to any of claims 1 to 7, wherein
the optical component (10; 310) is a photoelectric sensor,
the optical-component light passing unit (12a; 312a) allows light to pass through and be emitted out of the sensor (10; 310), and
the light transmissive element (23; 323) allows the emitted light to pass through.

9. The attachment (20; 320) for an optical component (10; 310) according to claim 8, wherein
the contact portion (81; 381) includes an end that comes in contact with the optical-component light passing unit (12a; 312a), and the end of the contact portion (81; 381) is inclined in correspondence with a surface (12s; 312s) of the optical-component light passing unit (12a; 312a) that is inclined relative to a direction perpendicular to a direction in which the light is emitted.

10. The attachment (20; 320) for an optical component (10; 310) according to claim 8 or 9, wherein
the accommodating unit (21; 321) covers a rectangular surface of the photoelectric sensor (10; 310) that is long in a first direction when the attachment (20; 320) is mounted on the optical component (10; 310), where the rectangular surface includes the optical-component light passing unit (12a; 312a), and
the attachment unit holds the photoelectric sensor (10; 310) in the first direction to attach the accommodating unit (21; 321) to the photoelectric sensor (10; 310).

11. The attachment (20; 320) according to claim 10, wherein the fixing portion (83; 383) is arranged on an end (82e, 82f; 382f) of the sealant (80; 380; 480) in the first direction.

12. A photoelectric sensor unit (100; 400), comprising:
a photoelectric sensor (10; 310) including a light emitting unit (50; 350; 21a) configured to emit light; and
the attachment (20; 320) for an optical component (10; 310) according to one of claims 1 to 11, the attachment (20; 320) being mountable onto the photoelectric sensor (10; 310),
wherein a part of the photoelectric sensor (10; 310) where the optical-component light passing unit (12a; 312a) is arranged is watertight.

13. A photoelectric sensor unit (100; 400), comprising:
a photoelectric sensor (10; 310) including a light emitting unit (50; 350; 21a) configured to emit light; and
the attachment (20; 320) for an optical component (10; 310) according to one of claims 1 to 11, the attachment (20; 320) being mountable onto the photoelectric sensor (10; 310),
wherein the photoelectric sensor (10; 310) includes an enclosure (100; 400) that is watertight.

## Patentansprüche

1. Aufsatz (20; 320), montierbar auf eine Oberfläche einer optischen Komponente (10; 310), wobei die Oberfläche der optischen Komponente (10; 310) eine Licht der optischen Komponente durchlassende Einheit (12a; 312a) aufweist, die dazu eingerichtet ist, Licht zu transmittieren, wobei der Aufsatz (20; 320) dazu in der Lage ist, einen durch die Licht der optischen Komponente durchlassende Einheit (12a; 312a) transmittierten Lichtstrahl zu formen, und aufweist:
ein lichttransmissives Element (23; 323), welches dazu eingerichtet ist, Licht zu transmittieren;
eine Aufnahmeeinheit (21; 321), welche dazu eingerichtet ist, das lichttransmissive Element (23; 323) aufzunehmen;
eine Anbringungseinheit (22a; 22b), welche dazu eingerichtet ist, die Aufnahmeeinheit (21; 321) auf der optischen Komponente (10; 310) auf solche Weise anzubringen, dass das lichttransmissive Element (23; 323) der Licht der optischen Komponente durchlassenden Einheit (12a; 312a) zugewandt ist; und
**gekennzeichnet durch**
eine Dichtung (80; 380; 480), die dazu eingerichtet ist, einen Lichtdurchgangsbereich (W), durch welchen Licht hindurchgeht, abzudichten und in einem Raum zwischen einer Oberfläche (12s; 312s) der Licht der optischen Komponente durchlassenden Einheit (12a; 312a), die dem lichttransmissiven Element (23; 323) zugewandt ist, und einer Oberfläche (23a; 323a) des lichttransmissiven Elements (23; 323), die der Licht der optischen Komponente durchlassenden Einheit (12a; 312a) zugewandt ist, angeordnet ist, wenn der Aufsatz (20; 320) auf die optische Komponente (10; 310) montiert ist,
wobei die Dichtung (80; 380; 480) umfasst:
einen Kontaktabschnitt (81; 381), der dazu eingerichtet ist, von der Oberfläche (12s; 312s) der Licht der optischen Komponente durchlassenden Einheit (12a; 312a) und der Oberfläche (23a; 323a) des lichttransmissiven Elements (23; 323) komprimiert zu werden und mit diesen in Kontakt zu kommen und einen Umfang des Lichtdurchgangsbereichs (W) in dem Raum abzudichten, wenn der Aufsatz (20; 320) auf die optische Komponente (10; 310) montiert ist,
einen Fixierungsabschnitt (83; 383), der nach außen von dem Kontaktabschnitt (81; 381) abgesetzt ist und dazu eingerichtet ist, den Kontaktabschnitt (81; 381) an der Aufnahmeeinheit (21; 321) zu fixieren; und
einen Verbindungsabschnitt (40; 85; 340; 385; 385LU, 385LD, 385RU, 385RD), der dazu eingerichtet ist, den Kontaktabschnitt (81; 381) und den Fixierungsabschnitt (83; 383) zu verbinden.

2. Aufsatz (20; 320) für eine optische Komponente (10; 310) nach Anspruch 1, wobei
der Fixierungsabschnitt (83; 383) an einem Ende (82e, 82f; 382f) der Dichtung (80; 380; 480) in einer Richtung entlang einer Oberfläche (21c; 321c) der Aufnahmeeinheit (21; 321) angeordnet ist.

3. Aufsatz (20; 320) für eine optische Komponente (10; 310) nach Anspruch 2, wobei
die Aufnahmeeinheit (21; 321) einen zugewandten Abschnitt (24c, 24d; 324d) aufweist, welcher dem Fixierungsabschnitt (83; 383) zugewandt ist,
der Fixierungsabschnitt (83; 383) und der zugewandte Abschnitt (24c, 24d; 324d) einen Zwischenraum (91, 92; 391, 392) dazwischen aufweisen, und
der Fixierungsabschnitt (83; 383) mit einem in dem Zwischenraum (91, 92; 391, 392) platzierten Klebstoff (93) an der Aufnahmeeinheit (21; 321) fixiert ist.

4. Aufsatz (20; 320) für eine optische Komponente (10; 310) nach Anspruch 3, wobei
der Fixierungsabschnitt (83; 383) und der zugewandte Abschnitt (24c, 24d; 324d) einander in einer Richtung zugewandt sind, die im Wesentlichen senkrecht zu einer Richtung ist, in welcher das lichttransmissive Element (23; 323) und die Licht der optischen Komponente durchlassende Einheit (12a; 312a) einander zugewandt sind.

5. Aufsatz (20; 320) für eine optische Komponente (10; 310) nach einem der Ansprüche 1 bis 4, wobei
der Kontaktabschnitt (81; 381) aufweist:
einen ersten Vorsprung (81a; 381a), der von einer Stelle, an welcher der Verbindungsabschnitt (40; 85; 340; 385; 385LU, 385LD, 385RU, 385RD) angeordnet ist, in Richtung des lichttransmissiven Elements (23; 323) vorsteht, und
einen zweiten Vorsprung (81b; 381b), der von einer Stelle, an welcher der Verbindungsabschnitt (40; 85; 340; 385; 385LU, 385LD, 385RU, 385RD) angeordnet ist, in entgegengesetzter Richtung des lichttransmissiven Elements (23; 323) vorsteht, und
der Verbindungsabschnitt (40; 85; 340; 385; 385LU, 385LD, 385RU, 385RD) von dem Kontaktabschnitt (81; 381) entlang einer Oberfläche (21c; 321c) der Aufnahmeeinheit (21; 321) verläuft.

6. Aufsatz (20; 320) für eine optische Komponente (10; 310) nach Anspruch 5, wobei
der Verbindungsabschnitt (40; 85; 340; 385; 385LU, 385LD, 385RU, 385RD) eine Stufe (82j, 82k) auf einer Oberfläche davon aufweist, wo der erste Vorsprung (81a; 381a) angeordnet ist, und ein Teil des Verbindungsabschnitts (40; 85; 340; 385; 385LU, 385LD, 385RU, 385RD) um den ersten Vorsprung (81a; 381a) herum dünner ist als andere Teile des Verbindungsabschnitts (40; 85; 340; 385; 385LU, 385LD, 385RU, 385RD).

7. Aufsatz (20; 320) für eine optische Komponente (10; 310) nach Anspruch 5 oder 6, wobei
der zweite Vorsprung (81b; 381b) eine Breite (W2) aufweist, die größer als eine Breite (W1) des ersten Vorsprungs (81; 381a) ist, und
der zweite Vorsprung (81b; 381b) um eine geringere Höhe als der erste Vorsprung (81a; 381a) vorsteht.

8. Aufsatz (20; 320) für eine optische Komponente (10; 310) nach einem der Ansprüche 1 bis 7, wobei
die optische Komponente (10; 310) ein photoelektrischer Sensor ist,
die Licht der optischen Komponente durchlassende Einheit (12a; 312a) gestattet, dass Licht durch sie hindurchgeht und aus dem Sensor (10; 310) emittiert wird, und
das lichttransmissive Element (23; 323) gestattet, dass das emittierte Licht durch es hindurchgeht.

9. Aufsatz (20; 320) für eine optische Komponente (10; 310) nach Anspruch 8, wobei
der Kontaktabschnitt (81; 381) ein Ende aufweist, das mit der Licht der optischen Komponente durchlassenden Einheit (12a; 312a) in Kontakt kommt, und das Ende des Kontaktabschnitts (81; 381) korrespondierend zu einer Oberfläche (12s; 312s) der Licht der optischen Komponenten durchlassenden Einheit (12a; 312a) geneigt ist, welche relativ zu einer Richtung geneigt ist, die senkrecht zu einer Richtung ist, in welcher das Licht emittiert wird.

10. Aufsatz (20; 320) für eine optische Komponente (10; 310) nach Anspruch 8 oder 9, wobei
die Aufnahmeeinheit (21; 321) eine rechteckige Oberfläche des photoelektrischen Sensors (10; 310) abdeckt, die in einer ersten Richtung lang ist, wenn der Aufsatz (20; 320) auf die optische Komponente (10; 310) montiert ist, und
die Anbringungseinheit den photoelektrischen Sensor (10; 310) in der ersten Richtung hält, um die Aufnahmeeinheit (21; 321) an dem photoelektrischen Sensor (10; 310) anzubringen.

11. Aufsatz (20; 320) nach Anspruch 10, wobei der Fixierungsabschnitt (83; 383) an einem Ende (82e, 82f; 382f) der Dichtung (80; 380; 480) in der ersten Richtung angeordnet ist.

12. Photoelektrische Sensoreinheit (100; 400), umfassend:
einen photoelektrischen Sensor (10; 310) mit einer Licht emittierenden Einheit (50; 350; 21a), welche dazu eingerichtet ist, Licht zu emittieren; und
den Aufsatz (20; 320) für eine optische Komponente (10; 310) nach einem der Ansprüche 1 bis 11, wobei der Aufsatz (20; 320) auf den photoelektrischen Sensor (10; 310) montierbar ist,
wobei ein Teil des photoelektrischen Sensors (10; 310), wo die Licht der optischen Komponente durchlassende Einheit (12a; 312a) angeordnet ist, wasserdicht ist.

13. Photoelektrische Sensoreinheit (100; 400), umfassend:
einen photoelektrischen Sensor (10; 310) mit einer Licht emittierenden Einheit (50; 350; 21a), die dazu eingerichtet ist, Licht zu emittieren; und
den Aufsatz (20; 320) für eine optische Komponente (10; 310) nach einem der Ansprüche 1 bis 11, wobei der Aufsatz (20; 320) auf den photoelektrischen Sensor (10; 310) montierbar ist,
wobei der photoelektrische Sensor (10; 310) ein Gehäuse (100; 400) aufweist, das wasserdicht ist.

## Revendications

1. Accessoire (20 ; 320) pouvant être monté sur une surface d'un composant optique (10 ; 310), la surface du composant optique (10 ; 310) comprenant une unité de passage de lumière (12a ; 312a) de composant optique configurée pour laisser passer de la lumière, l'accessoire (20 ; 320) étant apte à former un faisceau de lumière transmis à travers l'unité de passage de lumière (12a ; 312a) de composant optique, et comprenant :
un élément laissant passer la lumière (23 ; 323) configuré pour laisser passer la lumière ;
une unité de réception (21 ; 321) configurée pour recevoir l'élément laissant passer la lumière (23 ; 323) ;
une unité de fixation (22a ; 22b) configurée pour fixer l'unité de réception (21 ; 321) sur le composant optique (10 ; 310) d'une manière telle que l'élément laissant passer la lumière (23 ; 323) fasse face à l'unité de passage de lumière (12a ; 312a) de composant optique ; et
**caractérisé par**
un élément d'étanchéité (80 ; 380 ; 480) configuré pour étancher une zone de passage de lumière (W) au niveau de laquelle passe de la lumière étant compris dans un espace séparant une surface (12s ; 312s) de l'unité de passage de lumière (12a ; 312a) de composant optique faisant face à l'élément laissant passer la lumière (23 ; 323) et une surface (23a ; 323a) de l'élément laissant passer la lumière (23 ; 323) faisant face à l'unité de passage de lumière (12a ; 312a) de composant optique lorsque l'accessoire (20 ; 320) est monté sur le composant optique (10 ; 310),
dans lequel l'élément d'étanchéité (80 ; 380 ; 480) comprend
une partie de contact (81 ; 381) configurée pour être comprimée par la surface (12s ; 312s) de l'unité de passage de lumière (12a ; 312a) de composant optique et la surface (23a ; 323a) de l'élément laissant passer la lumière (23 ; 323) et pour venir en contact avec ces dernières ainsi que pour étancher une circonférence de la zone de passage de lumière (W) située dans l'espace lorsque l'accessoire (20 ; 320) est monté sur le composant optique (10 ; 310),
une partie de fixation (83 ; 383) espacée vers l'extérieur de la partie de contact (81 ; 381) et configurée pour fixer la partie de contact (81 ; 381) à l'unité de réception (21 ; 321), et
une partie de liaison (40 ; 85 ; 340 ; 385 ; 385LU, 385LD, 385RU, 385RD) configurée pour lier la partie de contact (81 ; 381) et la partie de fixation (83 ; 383).

2. Accessoire (20 ; 320) destiné à un composant optique (10 ; 310) selon la revendication 1, dans lequel
la partie de fixation (83 ; 383) est disposée au niveau d'une extrémité (82e, 82f ; 382f) de l'élément d'étanchéité (80 ; 380 ; 480) dans une direction le long d'une surface (21c ; 321c) de l'unité de réception (21 ; 321).

3. Accessoire (20 ; 320) destiné à un composant optique (10 ; 310) selon la revendication 2, dans lequel
l'unité de réception (21 ; 321) comprend une partie de vis-à-vis (24c, 24d ; 324d) située en vis-à-vis de la partie de fixation (83 ; 383),
un interstice (91, 92 ; 391, 392) sépare la partie de fixation (83 ; 383) et la partie de vis-à-vis (24c, 24d ; 324d), et
la partie de fixation (83 ; 383) est fixée à l'unité de réception (21 ; 321) au moyen d'un adhésif (93) placé dans l'interstice (91, 92 ; 391, 392).

4. Accessoire (20 ; 320) destiné à un composant optique (10 ; 310) selon la revendication 3, dans lequel
la partie de fixation (83 ; 383) et la partie de vis-à-vis (24c, 24d ; 324d) sont situées en vis-à-vis dans une direction sensiblement perpendiculaire à une direction dans laquelle l'élément laissant passer la lumière (23 ; 323) et l'unité de passage de lumière (12a ; 312a) de composant optique se font face.

5. Accessoire (20 ; 320) destiné à un composant optique (10 ; 310) selon l'une quelconque des revendications 1 à 4, dans lequel
la partie de contact (81 ; 381) comprend
une première saillie (81a ; 381a) en saillie de l'emplacement où est disposée la partie de liaison (40 ; 85 ; 340 ; 385 ; 385LU, 385LD, 385RU, 385RD) en direction de l'élément laissant passer la lumière (23 ; 323), et
une seconde saillie (81b ; 381b) en saillie de l'emplacement où est disposée la partie de liaison (40 ; 85 ; 340 ; 385 ; 385LU, 385LD, 385RU, 385RD) en direction opposée à l'élément laissant passer la lumière (23 ; 323), et
la partie de liaison (40 ; 85 ; 340 ; 385 ; 385LU, 385LD, 385RU, 385RD) s'étend de la partie de contact (81 ; 381) le long d'une surface (21c ; 321c) de l'unité de réception (21 ; 321).

6. Accessoire (20 ; 320) destiné à un composant optique (10 ; 310) selon la revendication 5, dans lequel
la partie de liaison (40 ; 85 ; 340 ; 385 ; 385LU, 385LD, 385RU, 385RD) comprend une partie étagée (82j, 82k) sur sa surface à l'emplacement où est disposée la première saillie (81a ; 381a), et une partie de la partie de liaison (40 ; 85 ; 340 ; 385 ; 385LU, 385LD, 385RU, 385RD) entourant la première saillie (81a ; 381a) est plus mince que d'autres parties de la partie de liaison (40 ; 85 ; 340 ; 385 ; 385LU, 385LD, 385RU, 385RD).

7. Accessoire (20 ; 320) destiné à un composant optique (10 ; 310) selon la revendication 5 ou la revendication 6, dans lequel
la seconde saillie (81b ; 381b) a une largeur (W2) supérieure à une largeur (W1) de la première saillie (81a ; 381a), et
la seconde saillie (81b ; 381b) fait saillie sur une hauteur inférieure à celle de la première saillie (81a ; 381a).

8. Accessoire (20 ; 320) destiné à un composant optique (10 ; 310) selon l'une quelconque des revendications 1 à 7, dans lequel
le composant optique (10 ; 310) est un capteur photoélectrique,
l'unité de passage de lumière (12a ; 312a) de composant optique permet à de la lumière de traverser l'élément laissant passer la lumière (23 ; 323) et d'être émise par le capteur (10 ; 310), et
l'élément laissant passer la lumière (23 ; 323) laisse passer la lumière émise.

9. Accessoire (20 ; 320) destiné à un composant optique (10 ; 310) selon la revendication 8, dans lequel
la partie de contact (81 ; 381) comprend une extrémité qui vient en contact avec l'unité de passage de lumière (12a ; 312a) de composant optique, et l'extrémité de la partie de contact (81 ; 381) est inclinée en correspondance avec une surface (12s ; 312s) de l'unité de passage de lumière (12a ; 312a) de composant optique qui est inclinée par rapport à une direction perpendiculaire à une direction dans laquelle est émise la lumière.

10. Accessoire (20 ; 320) destiné à un composant optique (10 ; 310) selon la revendication 8 ou la revendication 9, dans lequel
l'unité de réception (21 ; 321) couvre une surface rectangulaire du capteur photoélectrique (10 ; 310) qui est longue dans une première direction lorsque l'accessoire (20 ; 320) est monté sur le composant optique (10 ; 310), la surface rectangulaire comprenant l'unité de passage de lumière (12a ; 312a) de composant optique, et
l'unité de fixation maintient le capteur photoélectrique (10 ; 310) dans la première direction pour fixer l'unité de réception (21 ; 321) au capteur photoélectrique (10 ; 310).

11. Accessoire (20 ; 320) selon la revendication 10, dans lequel la partie de fixation (83 ; 383) est disposée sur une extrémité (82e, 82f ; 382f) de l'élément d'étanchéité (80 ; 380 ; 480) dans la première direction.

12. Unité capteur photoélectrique (100 ; 400), comprenant :
un capteur photoélectrique (10 ; 310) comprenant une unité d'émission de lumière (50 ; 350 ; 21a) configurée pour émettre de la lumière ; et
l'accessoire (20 ; 320) destiné à un composant optique (10 ; 310) selon l'une des revendications 1 à 11, l'accessoire (20 ; 320) pouvant être monté sur le capteur photoélectrique (10 ; 310),
dans laquelle une partie du capteur photoélectrique (10 ; 310) est étanche à l'eau à l'emplacement où est disposée l'unité de passage de lumière (12a ; 312a) de composant optique.

13. Unité capteur photoélectrique (100 ; 400), comprenant :
un capteur photoélectrique (10 ; 310) comprenant une unité d'émission de lumière (50 ; 350 ; 21a) configurée pour émettre de la lumière ; et
l'accessoire (20 ; 320) destiné à un composant optique (10 ; 310) selon l'une des revendications 1 à 11, l'accessoire (20 ; 320) pouvant être monté sur le capteur photoélectrique (10 ; 310),
dans laquelle le capteur photoélectrique (10 ; 310) comprend une enveloppe (100 ; 400) qui est étanche à l'eau.
